# EUROPEAN PATENT APPLICATION

(11) **EP 4 412 391 A1**
(43) Date of publication of application: **07.08.2024**
(21) Application number: 22882628.5
(22) Date of filing: 30.09.2022
(51) Int. Cl.: H04W 76/28, H04W 8/26, H04W 4/06

(54) **TRANSCEIVING METHOD AND APPARATUS FOR DISCONTINUOUS RECEPTION SIGNALING**

(30) Priority: 18.10.2021 CN 202111212108
(71) Applicant: Shanghai National Engineering Research Center of Digital Television Co., Ltd., Shanghai 200125 (CN)
(72) Inventor: WANG, Tingting, Shanghai 200240 (CN); HE, Dazhi, Shanghai 200240 (CN); ZHANG, Wenjun, Shanghai 200240 (CN); XU, Yin, Shanghai 200240 (CN); HUANG, Yihang, Shanghai 200240 (CN); HONG, Hanjiang, Shanghai 200240 (CN); OU, Xiaowu, Shanghai 200240 (CN); JIAO, Tianyu, Shanghai 200240 (CN)
(74) Representative: De Bonis, Paolo
(86) International application number: PCT/CN2022/123253
(87) International publication number: WO 2023/066017

(57) **Abstract**

Provided are a transceiving method and apparatus for a DRX command, relating to the field of 5G multicast technologies. The method includes the following steps. A receiving end receives a DRX command. The DRX command is scheduled by a physical downlink control channel addressed by a group-radio network temporary identifier. The receiving end uses a DRX cycle corresponding to the group-radio network temporary identifier for a multicast session corresponding to the group-radio network temporary identifier. With the technical solution of the present application, the receiving end is enabled to use the DRX cycle corresponding to the group-radio network temporary identifier for the multicast session corresponding to the group-radio network temporary identifier so that the power consumption of the receiving end can be reduced. Moreover, the manner in which the DRX command is scheduled by a physical downlink control channel addressed by a group-radio network temporary identifier can also avoid the resource waste caused by sending multiple DRX commands to multiple receiving ends by the sending end, thereby avoiding the resource consumption of a communication system and improving the processing performance of the communication system.

## Description

### TECHNICAL FIELD

The present application relates to the field of 5G multicast technologies and, in particular, to a transceiving method and apparatus for a discontinuous reception command.

### BACKGROUND

In the existing art, considering that the transmission of a data stream between a sending end and a receiving end is generally bursty, a discontinuous reception (DRX) manner is proposed. A discontinuous reception cycle is configured for a receiving end at an RRC_CONNECTED state. The discontinuous reception cycle includes on duration and opportunity for DRX. When the receiving end is in the on duration, the receiving end monitors a physical downlink control channel (PDCCH) to receive data delivered by the sending end in a physical downlink shared channel (PDSCH) corresponding to the PDCCH, while when the receiving end is in the opportunity for DRX, the receiving end neither monitors the PDCCH nor receives the corresponding data. In other words, a discontinuous reception manner is configured for the sending end and the receiving end in a communication system. The receiving end is controlled to use the discontinuous reception cycle so that a receiving circuit of the receiving end can be intermittently and cyclically closed/started when no data needs to be transmitted between the sending end and the receiving end, thereby reducing the power consumption of the receiving end and increasing the battery use time.

Correspondingly, in the existing art, the discontinuous reception manner is introduced for a 5G unicast session, and a unified standard is formed. Specifically, a receiving end for receiving the 5G unicast session uses the on duration while a timer drx-onDurationTimer is started. If the receiving end monitors a PDCCH scrambled by a cell-radio network temporary identifier (C-RNTI) within the operation time of the timer drx-onDurationTimer, the receiving ends starts a timer drx-InactivityTimer correspondingly, and monitors whether the PDCCH addressed to the C-RNTI is present in each subframe within the operation time of the timer drx-InactivityTimer. When the receiving end receives one piece of scheduling information within the operation time of the timer drx-InactivityTimer, the receiving end restarts the timer drx-InactivityTimer to further prolong the time for the receiving end to be in the on duration, and when the receiving end receives a discontinuous reception command, the receiving end stops the operation of the timer drx-onDurationTimer and the timer drx-InactivityTimer. When the timer drx-InactivityTimer runs overtime or the receiving end receives the discontinuous reception command: if a discontinuous reception short cycle is not configured for the receiving end, the receiving end directly uses a discontinuous reception long cycle, and if the discontinuous reception short cycle is configured for the receiving end, the receiving end uses the discontinuous reception short cycle and starts or restarts a timer drx-ShortCycleTimer. When the timer drx-ShortCycleTimer runs overtime, the receiving end uses the discontinuous reception long cycle. When the receiving end receives a long discontinuous reception command, the receiving end stops the operation of the timer drx-ShortCycleTimer and uses the discontinuous reception long cycle.

However, in the existing art, the discontinuous reception manner is still not configured for a 5G multicast session, and the unified standard is not formed. This is because, in order to achieve a unified control on the multiple receiving ends, the technology of transmitting data from one data source to multiple target receiving ends is mainly utilized during a transmission process of the multicast session. An existing unicast is based on one-to-one technology, that is, the sending end sends the discontinuous reception command, the receiving end monitors and receives the PDCCH addressed to the C-RNTI in the on duration to receive the discontinuous reception command, starts the corresponding timer, and uses the discontinuous reception cycle. If the existing technical solution for the 5G unicast session is directly applied to a multicast scenario, that is, the PDCCH scrambled by the C-RNTI is used for scheduling the discontinuous reception command and separately sending the discontinuous reception command to a group of user equipments corresponding to a certain multicast session, for one aspect, the sending end needs to send multiple discontinuous reception commands to different receiving ends, resulting in the resource waste, and for another aspect, if a discontinuous reception manner for a multicast session is directly introduced into the 5G standard based on an existing discontinuous reception manner for a unicast session, and these two discontinuous reception manners are separately configured, it is difficult to distinguish whether the discontinuous reception command received by the receiving end is for the unicast session or the multicast session, and it cannot be determined which configuration parameters corresponding to discontinuous reception should be used for execution. If the C-RNTI is directly replaced by a group-radio network temporary identifier, and specific operations after the group of user equipments receive the discontinuous reception command, such as the received command structure, also need to be redefined and refined. Technical enlightenments corresponding to these are not provided with in the existing art, let alone operational solutions.

Thus, a transceiving method for a discontinuous reception command for a multicast session is urgently needed now.

### SUMMARY

For a problem that a discontinuous reception manner is still not configured for the current multicast session, the present application provides a transceiving method and apparatus for a discontinuous reception command.

To solve the technical problem, the present application adopts the technical solutions below.

A receiving method for a discontinuous reception command is provided and includes the steps below.

A receiving end receives the discontinuous reception command. Where the DRX command is scheduled by a physical downlink control channel addressed by a radio network temporary identifier, and the radio network temporary identifier includes a group-radio network temporary identifier, the group-radio network temporary identifier corresponds to a multicast session and is configured to indicate a group of user equipments receiving the multicast session.

After receiving the discontinuous reception command, the receiving end uses a discontinuous reception cycle corresponding to the group-radio network temporary identifier for the multicast session.

A receiving method for a discontinuous reception command is provided and includes the steps below.

A receiving end receives the discontinuous reception command, where the DRX command is scheduled by a physical downlink control channel addressed to a group-radio network temporary identifier or a cell-radio network temporary identifier.

The receiving end obtains at least one of the group-radio network temporary identifier, a temporary mobile group identifier, or a session identifier indicated by at least one of the discontinuous reception command or a medium access control subheader.

After receiving the discontinuous reception command, the receiving end uses a discontinuous reception cycle for a multicast session corresponding to at least one of the G-RNTI, the TMGI, or the session identifier.

A sending method for a discontinuous reception command is provided and includes the steps below.

A sending end schedules the discontinuous reception command through a physical downlink control channel and scrambles the physical downlink control channel by a radio network temporary identifier.

The sending end sends the discontinuous reception command.

The RNTI includes a group-radio network temporary identifier, where the group-radio network temporary identifier corresponds to a multicast session and is configured to indicate a group of user equipments receiving the multicast session.

A sending method for a discontinuous reception command is provided and includes the steps below.

A sending end scrambles a physical downlink control channel scheduling the discontinuous reception command by a group-radio network temporary identifier or a cell-radio network temporary identifier.

The sending end identifies at least one of the group-radio network temporary identifier, a temporary mobile group identifier, or a session identifier in at least one of the discontinuous reception command or a medium access control subheader.

The sending end sends the discontinuous reception command.

A receiving apparatus for a discontinuous reception command is provided and includes a receiving module and a monitoring module.

The receiving module is configured to receive the discontinuous reception command.

The monitoring module is connected to the receiving module and is configured to monitor a physical downlink control channel scheduling the discontinuous reception command, where the physical downlink control channel is addressed by a radio network temporary identifier; wherein the radio network temporary identifier includes a group-radio network temporary identifier, and the group-radio network temporary identifier corresponds to a multicast session and is configured to indicate a group of user equipments receiving the multicast session.

The apparatus further includes an execution module.

The execution module is connected to the receiving module and is configured to, after the discontinuous reception command is received, use a discontinuous reception cycle corresponding to the group-radio network temporary identifier for the multicast session corresponding to the group-radio network temporary identifier.

The receiving apparatus for the discontinuous reception command is provided.

The receiving module is configured to receive the discontinuous reception command, where the radio network temporary identifier includes a cell-radio network temporary identifier; and the monitoring module is configured to monitor the physical downlink control channel scheduling the discontinuous reception command, wherein the physical downlink control channel is addressed to the group-radio network temporary identifier or the cell-radio network temporary identifier.

The apparatus further includes an obtaining module and the execution module.

The obtaining module is configured to obtain at least one of the group-radio network temporary identifier, a temporary mobile group identifier, or a session identifier indicated by at least one of the discontinuous reception command or a medium access control subheader.

The execution module is configured to, after the discontinuous reception command is received, use the discontinuous reception cycle for a multicast session corresponding to at least one of the group-radio network temporary identifier, the temporary mobile group identifier, or the session identifier.

A sending apparatus for a discontinuous reception command is provided and includes a sending module.

The sending module is configured to send the discontinuous reception command.

The apparatus further includes a scrambling module.

The scrambling module is connected to the sending module and is configured to scramble a physical downlink control channel scheduling the discontinuous reception command by a radio network temporary identifier, where the radio network temporary identifier includes a group-radio network temporary identifier, and the group-radio network temporary identifier corresponds to a multicast session and is configured to indicate a group of user equipments receiving the multicast session.

The sending apparatus for the discontinuous reception command is provided. The radio network temporary identifier includes a cell-radio network temporary identifier.

The scrambling module is configured to scramble the physical downlink control channel scheduling the discontinuous reception command by the group-radio network temporary identifier or the cell-radio network temporary identifier.

The apparatus further includes an indication module.

The indication module is connected to the sending module and configured to indicate at least one of the group-radio network temporary identifier, a temporary mobile group identifier, or a session identifier in at least one of the discontinuous reception command or a medium access control subheader.

The sending module is configured to send the discontinuous reception command.

The present application has the following beneficial effects. The discontinuous reception command is scheduled by a physical downlink control channel addressed to the group-radio network temporary identifier so that the receiving end can use the discontinuous reception cycle corresponding to the group-radio network temporary identifier after receiving the discontinuous reception command, reducing the power consumption of the receiving end. Moreover, the manner in which the discontinuous reception command is scheduled the physical downlink control channel addressed to the group-radio network temporary identifier can also avoid the resource waste caused by sending multiple discontinuous reception commands to multiple receiving ends by the sending end, thereby avoiding the resource consumption of a communication system and improving the processing performance of the communication system.

### BRIEF DESCRIPTION OF DRAWINGS

FIG. 1 is a flowchart of a receiving method for a discontinuous reception command according to embodiment one of the present application.
FIG. 2 is a flowchart of a receiving method for a discontinuous reception command according to embodiment two of the present application.
FIG. 3 is a flowchart of a receiving method for a discontinuous reception command according to embodiment three of the present application.
FIG. 4 is a flowchart of a receiving method for a discontinuous reception command according to embodiment four of the present application.

### DETAILED DESCRIPTION

The present application is further described below in conjunction with the drawings and specific embodiments, which should not be construed as a limitation of the present application.

To effectively utilize mobile network resources, the 3rd Generation Partnership Project (3GPP) proposes the multicast technology. The manner of transmitting data from one data source to multiple target user equipments achieves resource sharing between a core network and an access network and improves the network resource utilization rate, especially for the utilization rate of air interface resources. A multicast session defined by 3GPP can not only achieve the multicasting and broadcasting of plain text and low-rate messages but also achieve the broadcasting and multicasting of high-speed multimedia sessions, providing various rich videos, audios and multimedia sessions.

For the multicast session, the present application provides a data discontinuous reception method and apparatus. It is to be noted that the multicast session described in the present application may be a multicast session or a broadcasting session or may also be referred to as a multicast broadcast session (MBS). This is not limited by the present application.

The present application provides a sending method for a discontinuous reception command. The method includes the steps below.

A sending end schedules the discontinuous reception command through a physical downlink control channel and scrambles the physical downlink control channel by a radio network temporary identifier.

The sending end sends the discontinuous reception command.

The radio network temporary identifier includes a group-radio network temporary identifier, where the group-radio network temporary identifier corresponds to a multicast session and is configured to indicate a group of user equipments receiving the multicast session.

The present application further provides a sending method for a discontinuous reception command. The method includes the steps below.

A sending end schedules the discontinuous reception command through a physical downlink control channel, and scrambles the physical downlink control channel by a radio network temporary identifier.

The sending end identifies a group-radio network temporary identifier, a temporary mobile group identifier, or a session identifier in at least one of the discontinuous reception command or a medium access control subheader.

The sending end sends the discontinuous reception command.

The sending method provided in the present application actually includes two manners. The first sending method is that the sending end sends the discontinuous reception command and scrambles the physical downlink control channel scheduling the discontinuous reception command by the group-radio network temporary identifier. Where the group-radio network temporary identifier corresponds to a multicast session and is configured to indicate a group of user equipments receiving the multicast session.

The second sending method is that the sending end sends the discontinuous reception command and indicates the group-radio network temporary identifier and/or a temporary mobile group identifier and/or a session identifier in the discontinuous reception command, where the group-radio network temporary identifier and/or the temporary mobile group identifier and/or the session identifier correspond to at least one multicast session and is configured to indicate a group of user equipments receiving the at least one multicast session.

The group-radio network temporary identifier is configured to indicate a group of user equipments receiving a certain multicast session. For ease of description, in the present application, a G-RNTI (which stands for the group-radio network temporary identifier) is denoted in the following text. In the present application, the G-RNTI, the multicast session, a TMGI (which stands for the temporary mobile group identifier) and the group of user equipments receiving the multicast session correspond to each other. The discontinuous reception command is configured to indicate that the receiving end receives the multicast session in a discontinuous reception manner. For brevity of description, in the present application, the discontinuous reception command may also be denoted by a DRX Command.

Correspondingly, when the first sending method is adopted, the sending end uses the G-RNTI to scramble the physical downlink control channel (PDCCH) scheduling the DRX Command, and when a receiving end that receives the multicast session corresponding to the G-RNTI blindly detects the PDCCH, the receiving end can obtain the PDCCH addressed to the G-RNTI, then obtains downlink control information (DCI) carried in the PDCCH, and finally receives the DRX Command carried in a physical downlink shared channel (PDSCH) indicated by the DCI. However, a receiving end not requiring reception of the multicast session will not receive the multicast session due to the failure to obtain the PDCCH addressed to the G-RNTI, let alone receive the multicast session in the DRX manner. Therefore, the object of receiving the multicast session corresponding to the G-RNTI by the receiving end that receives the DRX Command in the DRX manner can be achieved.

Correspondingly, when the second sending method is adopted, the sending end indicates the G-RNTI by the DRX Command, and after the receiving end that receives the multicast session corresponding to the G-RNTI receives the DRX Command, the receiving end obtains the G-RNTI indicated by the DRX Command and receives the multicast session corresponding to the G-RNTI in the DRX manner. Therefore, the object of receiving the multicast session corresponding to the G-RNTI by the receiving end that receives the DRX Command in the DRX manner can be achieved.

Therefore, for multicast sessions, the sending end may learn in advance the patterns, frequencies and priorities of the arrivals of different multicast sessions and may learn in advance the power situations and session receiving situations of different receiving ends through information interaction with the sending end and the different receiving ends. Further, the preceding sending method is adopted for sending the DRX Command to control all user equipments or some user equipments that correspond to one or more sessions to receive the one or more sessions in the DRX manner or control different user equipments to receive one or more sessions of all received sessions in the DRX manner.

It is to be noted herein that the G-RNTI may be considered as an indication value, and a session identifier may also be denoted as a session ID or the TMGI. Therefore, though these three have different meanings and are separately defined in the standard, these three are mapped to each other, and the mapping relationship between these three is configured by the network.

There is a corresponding relationship between the G-RNTI, the session ID, the TMGI, the multicast session and the group of user equipments receiving the multicast session. In this case, when the DRX manner is adopted in the present application by indicating content in the DRX Command, this may be directly performed in the manner of "the G-RNTI is indicated by the DRX Command, and the receiving end uses a DRX cycle corresponding to the G-RNTI for the multicast session corresponding to the G-RNTI" or may also be performed in the manner of replacing the G-RNTI with the TMGI and the session ID, that is, "the session ID is indicated by the DRX Command, and the receiving end uses a DRX cycle corresponding to the session ID for the multicast session corresponding to the session ID", or "the TMGI is indicated by the DRX Command, and the receiving end uses a DRX cycle corresponding to the TMGI for the multicast session corresponding to the TMGI", or "the session ID and the TMGI are indicated by the DRX Command, and the receiving end uses a DRX cycle for the multicast session jointly corresponding to the session ID and the TMGI", or "the G-RNTI and the TMGI are indicated by the DRX Command, and the receiving end uses a DRX cycle for the multicast session jointly corresponding to the G-RNTI and the TMGI", or "the G-RNTI and the session ID are indicated by the DRX Command, and the receiving end uses a DRX cycle for the multicast session jointly corresponding to the G-RNTI and the session ID", or "the G-RNTI, the TMGI and the session ID are indicated by the DRX Command, and the receiving end uses a DRX cycle for the multicast session jointly corresponding to the G-RNTI, the TMGI and the session ID". These are all equivalent technical solutions and can achieve the same technical effect. Therefore, when the second sending method is performed, the following operation may further be included in the present application: the TMGI and/or session ID are indicated by the DRX Command, and the sending end sends the DRX Command. Correspondingly, after the receiving end receives the DRX Command, the receiving end obtains the TMGI and/or session ID in the DRX Command and receives at least one multicast session corresponding to the TMGI and/or the session ID (which is also a multicast session corresponding to the G-RNTI) in the DRX manner. In this case, the receiving end that receives the DRX Command is finally enabled to receive the at least one multicast session in the DRX manner. Considering that whether the sending end indicates the DRX Command by the G-RNTI or TMGI and/or session ID, the difference lies only in the indication content limited by the DRX Command, while the other remaining operations are the same. Therefore, subsequent implementations provided in the present application are described for an indication of the G-RNTI, and an indication of the TMGI and/or session ID is not repeated. Correspondingly, when a corresponding receiving method is performed, a portion that obtains the TMGI and/or session ID in the DRX Command is also not repeated.

There is also a corresponding relationship between the G-RNTI, the session ID, the TMGI, the multicast session and user identifier (that is, a cell-radio network temporary identifier (C-RNTI)) of the group of user equipments receiving the multicast session. In this case, when the preceding sending end enables the receiving end that receives the multicast session corresponding to the G-RNTI to receive the DRX Command addressed to the G-RNTI, the following operation is further included in the present application when the second sending method is performed: the PDCCH scheduling the DRX Command is scrambled by the C-RNTI corresponding to the receiving end. Correspondingly, when the receiving end blindly detects the PDCCH, the receiving end obtains the PDCCH addressed to the C-RNTI, obtains the DCI carried in the PDCCH, receives the DRX Command carried in the PDSCH indicated by the DCI, obtains the G-RNTI indicated by the DRX Command, and finally receives the multicast session corresponding to the G-RNTI in the DRX manner. It is to be noted that the second sending method may also be performed by scrambling the PDCCH scheduling the DRX Command using G-RNTI and is not limited by a scrambling manner in an execution process. The C-RNTI herein refers to the unique radio network temporary identifier in the communication system that is configured by the sending end for the receiving end and directly corresponds to the receiving end. The C-RNTI only corresponds to the receiving end itself and is entirely independent of the multicast session received by the receiving end. The G-RNTI directly corresponds to the multicast session and thus corresponds to the group of user equipments receiving the multicast session.

Therefore, though a user equipment and the receiving end are essentially the same, the common corresponding meanings and relationships of different terms are considered: for the sending end of the communication system, the receiving end is usually adopted for correspondingly describing a device that receives data sent by the sending end; and for sessions in the communication system, the user equipment is usually adopted for correspondingly describing a device that receives the sessions. A difference is also made herein in the present application.

In addition, in the present application, though "the sending end" is adopted for describing the device that sends the sessions, and "the receiving end" is adopted for describing the device that receives the sessions, no limitations are imposed on specific devices of the sending end and the receiving end. For example, when the present application is applied in a mobile terminal communication system such as the wireless communication of a mobile device, the sending end is a base station, and the receiving end and the user equipment are mobile device. When the present application is applied in another communication system such as the self-organized network communication of a smart automobile to upgrade software, the sending end is a smart automobile V1 or a base station that sends a software packet, the receiving end is a smart automobile V2 that receives the software packet, and a user reception session refers to that the smart automobile V2 receives the software packet for upgrading.

In conclusion, the sending end may send the DRX Command through the preceding sending methods to control the receiving end to receive the multicast session corresponding to the G-RNTI in the DRX manner.

The present application provides a receiving method for a DRX Command. The method includes the steps below.

A receiving end receives the DRX Command, where the DRX Command is scheduled by a PDCCH addressed to an RNTI, and the RNTI includes a G-RNTI, the G-RNTI corresponds to a multicast session and is configured to indicate a group of user equipments receiving the multicast session.

After the receiving end receives the DRX Command, the receiving end uses the DRX cycle for the multicast session corresponding to the G-RNTI.

The present application further provides a receiving method for a DRX Command. The method includes the steps below.

A receiving end receives the DRX Command, where an RNTI includes a cell-radio network temporary identifier (C-RNTI), and the DRX Command is scheduled by the PDCCH addressed to the G-RNTI or the C-RNTI.

The receiving end obtains a G-RNTI and/or a TMGI and/or a session ID indicated by the DRX Command and/or a MAC subheader.

After receiving the DRX Command, the receiving end uses the DRX cycle for the multicast session corresponding to the G-RNTI and/or the TMGI and/or the session ID.

The receiving method provided in the present application actually includes two manners. The first receiving method is that the receiving end receives the DRX Command, the DRX Command is scheduled by the PDCCH addressed to the G-RNTI, the G-RNTI corresponds to the multicast session and is configured to indicate the group of user equipments receiving the multicast session, and after receiving the DRX Command, the receiving end uses the DRX cycle corresponding to the G-RNTI for the multicast session corresponding to the G-RNTI.

The second receiving method is that the receiving end receives the DRX Command, the G-RNTI and/or TMGI and/or session ID are indicated by the DRX Command, the G-RNTI and/or TMGI and/or session ID corresponds to at least one multicast session and is configured to indicate the group of user equipments receiving the at least one multicast session, and after receiving the DRX Command, the receiving end uses the DRX cycle corresponding to the G-RNTI for the multicast session corresponding to the G-RNTI. It is to be noted herein that the execution manner only limits the indication content in the DRX Command and does not limit the scrambling manner of the PDCCH scheduling the DRX Command. That is, when the second receiving method is performed, no matter the receiving end monitors whether the PDCCH addressed to the G-RNTI or the PDCCH addressed to the C-RNTI corresponding to the receiving end itself, the receiving end receives and obtains identifiers (the G-RNTI and/or TMGI and/or session ID) in the DRX Command, and the receiving end that receives the multicast session finally receives the at least one multicast session corresponding to the identifiers in the DRX manner. When the second receiving method is performed, the TMGI, the session ID, the TMGI and session ID, the G-RNTI and TMGI, the G-RNTI and session ID, and the G-RNTI, TMGI and session ID may also be indicated by the received DRX Command, and the receiving end obtains the identifiers (the G-RNTI and/or TMGI and/or session ID) in the DRX Command and uses the DRX cycle for the at least one multicast session corresponding to the identifiers.

Specifically, the receiving end receives the multicast session in the DRX manner according to the received DRX Command.

Correspondingly, when the first receiving method is adopted, based on the G-RNTI corresponding to the multicast session received by the receiving end, the receiving end blindly detects the PDCCH addressed to the G-RNTI, then receives the DCI carried in the PDCCH, next receives the DRX Command carried in the PDSCH indicated by the DCI, and finally uses the DRX cycle corresponding to the G-RNTI for the multicast session corresponding to the G-RNTI. For example, both receiving ends D and E receive a session C, so when receiving data delivered by the sending end, both the receiving ends D and E detect the PDCCH addressed to the G-RNTI through blind detection and receive the DCI carried in the PDCCH to acquire the DRX Command carried in the PDSCH indicated by the DCI. Therefore, for the session C corresponding to the G-RNTI, both the receiving ends D and E use the DRX cycle corresponding to the G-RNTI and receive data of the session C in the DRX manner, that is, the receiving ends D and E only start receiving circuits and receive the data of the session C in the on duration in the DRX cycle and close the receiving circuits and do not receive the data of the session C in the opportunity for DRX.

Correspondingly, when the second receiving method is adopted, the receiving end uses the DRX cycle corresponding to the G-RNTI for the multicast session corresponding to the G-RNTI through the G-RNTI indicated by the received DRX Command. For example, the receiving end D simultaneously receives multiple sessions such as the session C and a session D, and when the receiving end D obtains that the G-RNTI corresponding to the session C is only indicated but a G-RNTI corresponding to the session D is not indicated by all received DRX Commands, the receiving end D uses the DRX cycle corresponding to the G-RNTI for the session C to receive the data of the session C in the DRX manner and receives the data of the session D in a conventional continuous reception manner for the session D.

Further, when the second receiving method is adopted, the following operations may also be performed: the PDCCH is scrambled by the C-RNTI corresponding to the receiving end, and correspondingly, when the receiving end blindly detects the PDCCH, the receiving end can obtains the PDCCH addressed to the C-RNTI corresponding to the receiving end itself, obtains the DCI carried in the PDCCH, receives the DRX Command carried in the PDSCH indicated by the DCI, obtains the G-RNTI indicated by the DRX Command, and finally receives the multicast session corresponding to the G-RNTI in the DRX manner.

In conclusion, the receiving end may receive the DRX Command through the preceding receiving methods and use the DRX cycle corresponding to the G-RNTI so that the receiving end can receive the multicast session corresponding to the G-RNTI in the DRX manner.

The present application provides a sending method for a DRX Command. The DRX Command may be Radio Resource Control (RRC) layer information, physical layer (PHY) information, Radio Link Control (RLC) layer information, or Packet Data Convergence Protocol (PDCP) layer information, or medium access control (MAC) layer information.

The present application provides a receiving method for a DRX Command. The DRX Command received by the receiving end may be the RRC layer formation, or the PHY information, or the RLC layer information, or the PDCP layer information, or the MAC layer information.

Specifically, for example, when the DRX Command is the RRC layer information, parameters related to the DRX Command and/or a long DRX Command are configured for the G-RNTI and/or the multicast session corresponding to the G-RNTI. There are two value assignment manners for each parameter. For example, if an assigned value is 1, this indicates that the DRX Command is enabled, and after receiving the DRX Command, the receiving end uses the DRX cycle corresponding to the G-RNTI, and if the assigned value is 0, this indicates that the DRX Command is disabled, and after receiving the DRX Command, the receiving end neglects the DRX Command. If the first sending method and the first receiving method are adopted, a PDCCH scheduling an RRC layer message is scrambled by the G-RNTI. Correspondingly, the RRC layer message is received by all receiving ends receiving the multicast session corresponding to the G-RNTI.

When being an MAC layer message, the DRX Command is an MAC control element (MAC CE). Correspondingly, the DRX Command may be denoted as a DRX Command MAC CE.

It is to be noted that in the communication system, a user equipment having multiple multicast sessions and receiving the multiple multicast sessions has multiple G-RNTIs correspondingly, and different G-RNTIs correspond to different DRX cycles, that is, the sending end sends the DRX Command and the receiving end uses a DRX cycle after receiving the DRX Command, where the DRX cycle is a cycle corresponding to the G-RNTI. For example, for a multicast session C and a multicast session D, when receiving a DRX Command corresponding to a G-RNTI_{C} sent by the sending end, the receiving end D uses a DRX cycle corresponding to the session C and receives data of the session C using DRX configuration parameters corresponding to the G-RNTI_{C} corresponding to the session C. When receiving a DRX Command corresponding to a G-RNTI_{D} sent by the sending end, the receiving end D uses a DRX cycle corresponding to the G-RNTI_{D} corresponding to the session D and receives data of the session D using DRX configuration parameters corresponding to the G-RNTI_{D} corresponding to the session D. Therefore, for each G-RNTI, in the present application, all configuration parameters for controlling a DRX operation of the multicast session corresponding to the each G-RNTI are referred to as a DRX pattern for multicast, and that the receiving end described in the present application uses a DRX cycle corresponding to the each G-RNTI (uses the DRX cycle corresponding to the each G-RNTI) to receive data corresponding to the each G-RNTI in a DRX pattern corresponding to the each G-RNTI refers to that the receiving end receives the multicast session of the each G-RNTI using configuration parameters in the DRX pattern for multicast corresponding to the each G-RNTI.

The present application provides a sending method for a DRX Command. Before sending the DRX Command, the sending end configures a corresponding DRX pattern for multicast for the G-RNTI.

In an implementation provided in the present application, before sending the DRX Command, the sending end configures the corresponding DRX pattern for multicast for the G-RNTI. The DRX pattern for multicast includes any one of the following parameters. In other words, before sending the DRX Command, the sending end may also configure at least one of the following corresponding parameters for the G-RNTI in a random order:
an on duration timer for multicast, an inactivity timer for multicast, a DRX long cycle for multicast, a DRX long cycle start subframe for multicast, or a DRX long cycle start slot for multicast.

In other implementations provided in the present application, the sending end may configure at least one of the following corresponding parameters for the G-RNTI in a random order:
the on duration timer for multicast, the inactivity timer for multicast, the DRX long cycle for multicast, the DRX long cycle start subframe for multicast, the DRX long cycle start slot for multicast, a DRX short cycle for multicast, or a DRX short cycle counter for multicast.

The present application further provides a receiving method for a DRX Command. Before receiving the DRX Command, the receiving end receives the configured DRX pattern for multicast corresponding to the G-RNTI.

Specifically, before sending the DRX Command corresponding to the G-RNTI, the sending end also configures the DRX pattern for multicast corresponding to the G-RNTI so that the receiving end can use the DRX cycle corresponding to the G-RNTI after receiving the DRX Command and can receive the multicast session corresponding to the G-RNTI by the DRX pattern for multicast corresponding to the G-RNTI in the DRX cycle.

In an implementation provided in the present application, before receiving the DRX Command, the receiving end configures the DRX pattern for multicast corresponding to the G-RNTI. The DRX pattern for multicast includes any one of the following parameters. In other words, before receiving the DRX Command, the receiving end may also configure at least one of the following parameters corresponding to the G-RNTI in a random order:
an on duration timer for multicast, an inactivity timer for multicast, a DRX long cycle for multicast, a DRX long cycle start subframe for multicast, or a DRX long cycle start slot for multicast.

In other implementations provided in the present application, the receiving end may configure at least one of the following parameters corresponding to the G-RNTI in a random order:
the on duration timer for multicast, the inactivity timer for multicast, the DRX long cycle for multicast, the DRX long cycle start subframe for multicast, the DRX long cycle start slot for multicast, a DRX short cycle for multicast, or a DRX short cycle counter for multicast.

The configuration parameters in the DRX pattern for multicast described in the present application include the on duration timer for multicast.

The on duration timer for multicast herein is configured to denote a duration for monitoring at the beginning of the DRX cycle, that is, the length of the on duration for multicast. Correspondingly, the sending end may configure a corresponding on duration timer for the receiving end so that the on duration timer can time according to the corresponding length of the on duration for multicast and the receiving end can monitor the PDCCH and receive the DCI within the on duration. The term "length of the on duration for multicast", the term "on duration timer for multicast" and other similar terms may be denoted as "drx-onDurationTimer" or "drx-onDurationTimerPTM" or may also be denoted by other terms such as "drx-PTMonDurationTimer". This is not limited in the present application herein.

Considering that the receiving end is likely to continue being scheduled within the next few subframes after being scheduled and receiving or sending data in a certain subframe, and waiting for the next DRX cycle to transceive sessions brings an additional delay. Therefore, to reduce the delay, the receiving end is enabled to continue being in the on duration after being scheduled, that is, the inactivity is configured, and the receiving end continues monitoring the PDCCH within the inactivity.

The configuration parameters in the DRX pattern for multicast described in the present application include the inactivity timer for multicast.

The inactivity timer for multicast herein is configured to denote the duration for monitoring after the receiving end monitors the PDCCH, that is, the length of the inactivity for multicast. Correspondingly, the sending end may configure an inactivity timer for multicast for the receiving end so that the inactivity timer for multicast can time according to the length of the inactivity for multicast and the receiving end can continue monitoring the PDCCH and receive the DCI within the inactivity. The term "length of the inactivity for multicast", the term "inactivity timer for multicast" or other similar terms may be denoted as "drx-InactivityTimer" or "drx-InactivityTimerPTM" or may also be denoted by other terms such as "drx-PTMInactivityTimer". This is not limited in the present application herein.

The configuration parameters in the DRX pattern for multicast described in the present application may further include the length of the DRX long cycle for multicast.

The length of the DRX long cycle for multicast herein is configured to denote the total duration of the DRX long cycle for multicast used by the receiving end. Correspondingly, the sending end may also configure a DRX long cycle timer for the receiving end; the receiving end may time according to the length of the DRX long cycle for multicast, and then monitor the PDCCH and finally receive the DCI within the on duration and the inactivity of the DRX long cycle for multicast. The term "length of the DRX long cycle for multicast", the term "DRX long cycle timer for multicast" or other similar terms may be denoted as "drx-LongDRXCycle-PTM" or "drx-LongCycle-PTM" or may also be denoted by other terms such as "drx-PTMLongDRXCycle", "drx-DRXCycle" or "drx-DRXCyclePTM". This is not limited in the present application herein.

The configuration parameters in the DRX pattern for multicast described in the present application may further include the DRX long cycle start subframe for multicast.

The DRX long cycle start subframe for multicast is configured to denote that the receiving end uses the DRX long cycle for multicast from this subframe. The term "DRX long cycle start subframe for multicast" is generally denoted as "drx-LongCycleStartOffsetPTM" or may also be denoted by other terms such as "drx-LongCycleStartOffset" or "drx-PTMLongCycleStartOffset". This is not limited in the present application.

The configuration parameters in the DRX pattern for multicast described in the present application may further include the DRX long cycle start slot for multicast.

The DRX long cycle start slot for multicast is configured to indicate that the receiving end uses the DRX long cycle for multicast from the start slot in the start subframe. The term "DRX long cycle start slot for multicast" is generally denoted as "drx-SlotOffsetPTM" or may also be denoted by other terms such as "drx-PTMSlotOffset" or "drx-SlotOffset". This is not limited in the present application.

The configuration parameters in the DRX pattern for multicast described in the present application may further include the DRX short cycle for multicast.

The DRX short cycle for multicast herein is configured to denote the total duration of the DRX short cycle for multicast used/started by the receiving end. Correspondingly, the receiving end may also configure the length of the DRX short cycle for multicast so that a DRX short cycle timer for multicast can time according to the length of the DRX short cycle for multicast and the receiving end can monitor the PDCCH and receive the DCI within the on duration and the inactivity of the DRX short cycle for multicast. The term "DRX short cycle timer for multicast" or other similar terms may be denoted as "drx-shortDRXCycle" or "drx-shortDRXCyclePTM" or may also be denoted by other terms such as "drx-PTMshortDRXCycle". This is not limited in the present application herein.

The configuration parameters in the DRX pattern for multicast described in the present application may further include the DRX short cycle counter for multicast.

The DRX short cycle counter for multicast herein is configured to indicate the total number of times for the receiving end to continuously use the DRX short cycle for multicast. Correspondingly, the receiving end may also configure the total number of times of the DRX short cycles for multicast so that the receiving end can use the DRX short cycle for multicast and start the DRX short cycle counter for multicast at the same time and count using the total number of times of DRX short cycles for multicast to control the receiving end to receive sessions using continuous DRX short cycles for multicast. In other words, the length of the DRX short cycle for multicast in this case may also be considered as the total cycle length composed of DRX short cycles for multicast corresponding to the number of times. For example, when the number of times of DRX short cycles for multicast is two, the receiving end may continue to use the second DRX short cycle for multicast to receive the sessions after the first DRX short cycle for multicast is ended. The term "DRX short cycle counter for multicast" is generally denoted as "drx-ShortCycleTimer" or "drx-ShortCycleTimerPTM" or may also be denoted by other terms such as "drx-PTMShortCycleTimer" or "drx-ShortDRXCycleTimer". This is not limited in the present application.

It is to be noted herein that the configured DRX long cycle for multicast and the configured DRX short cycle for multicast may have the same length of the on duration and the same length of the inactivity or may have different length of the on duration and different length of the inactivity. In other words, when the length of the on duration and the length of the inactivity in the short cycle are the same as the length of the on duration and the length of the inactivity in the long cycle, the receiving end monitors the PDCCH by the initially configured length of the on duration and/or the initially configured length of the inactivity, and when the DRX Command received by the receiving end indicates that the receiving end uses the long cycle or the short cycle, the receiving end receives corresponding sessions within the same length of the on duration or the same length of the inactivity. When the length of the on duration and the length of the inactivity in the short cycle are different from the length of the on duration and the length of the inactivity in the long cycle, the sending end configures the length of the on duration, the length of the on duration in the short cycle, the length of the inactivity in the short cycle, the length of the on duration in the long cycle, and the length of the inactivity in the long cycle in a pattern for multicast. Correspondingly, the receiving end monitors the PDCCH by the length of the on duration and/or the length of the inactivity, and when the DRX Command received by the receiving end indicates that the receiving end uses the short cycle, the receiving end receives the sessions in the length of the on duration in the short cycle and/or the length of the inactivity in the short cycle, and when the DRX Command indicates that the receiving end uses the long cycle, the receiving end receives the sessions in the length of the on duration in the long cycle and/or the length of the inactivity in the long cycle.

In some certain special cases, when finding that the preconfigured DRX pattern for multicast does not satisfy the current session requirements, the sending end may also adjust the current DRX pattern for multicast. For example, values are reassigned to the parameters in the DRX pattern for multicast, and the parameters are reconfigured using the adjusted DRX pattern for multicast. In other words, after receiving the DRX Command each time, the receiving end uses the DRX cycle for multicast according to the preconfigured and corresponding DRX pattern for multicast. The sending end only configures the DRX pattern for multicast corresponding to the G-RNTI once and then delivers the DRX Command at any time according to the session situation corresponding to the G-RNTI and the situation of the receiving end receiving the sessions within the current time and a certain time in the future. After receiving the DRX Command corresponding to the G-RNTI, the receiving end uses the DRX cycle for multicast according to the configuration parameters in the DRX pattern for multicast received in advance and performs operations using the configuration parameters in the DRX pattern for multicast.

In other words, the sending end pre-configures a DRX pattern₀ for multicast (which is also referred to as a DRX pattern₀ for multicast) corresponding to a G-RNTI₀ for the receiving end (that is, a set of parameters corresponding to the G-RNTI₀ and used for DRX are configured) mentioned in the following text, and the receiving end uses the DRX cycle in the DRX pattern for multicast corresponding to the G-RNTI after receiving the DRX Command (that is, to operate using configured "values of parameters of a DRX cycle corresponding to the G-RNTI₀"); the receiving end operates the DRX long cycle timer for multicast in the DRX pattern for multicast corresponding to the G-RNTI (that is, to time using configured values of parameters of "a DRX long cycle timer for multicast corresponding to the G-RNTI₀"); the receiving end operates the DRX short cycle timer for multicast in the DRX pattern for multicast corresponding to the G-RNTI (that is, to time using configured values of parameters of "a DRX short cycle timer for multicast corresponding to the G-RNTI₀"); the receiving end starts a DRX on duration timer for multicast in the DRX pattern for multicast corresponding to the G-RNTI₀ (that is, to start to time using configured values of parameters of "the DRX on duration timer for multicast corresponding to the G-RNTI₀"); and the receiving end starts an inactivity timer for multicast in the DRX pattern for multicast corresponding to the G-RNTI₀ (that is, to start to time using configured values of parameters of "the inactivity timer for multicast corresponding to the G-RNTI₀).

It is to be noted herein that the DRX short cycle is only a transition state between continuous reception cycle and the DRX long cycle, that is, the on duration is started to use after a relatively short opportunity for DRX, and if the receiving end does not receive data after several short cycles, this indicates that this session is very sparse within this time and a time in the future, and the receiving end may use the DRX long cycle, that is, use the on duration after a relatively long opportunity for DRX. Correspondingly, the purpose of sending the DRX Command by the sending end in the present application is to enable the receiving end to use the DRX cycle after the receiving end receives the DRX Command. A balanced choice between power conservation and data receiving delay is included as to whether it is indicated that the receiving end uses the DRX long cycle for multicast or the DRX short cycle for multicast. From one aspect, that the receiving end is controlled to use the DRX long cycle for multicast means that the time for the receiving end to be in a dormant state is relatively long, thereby facilitating the prolonging of the battery use time of the receiving end. From another aspect, when new data is transmitted, the receiving end is controlled to use the DRX short cycle for multicast, facilitating the fast response of the receiving end. Therefore, in the present application, to distinguish different DRX Commands sent by the sending end and enable the receiving end to use different DRX cycles, that is, the DRX short cycle for multicast or the DRX long cycle for multicast, the DRX Command is provided and includes a first Command and a second Command. The first Command is a DRX Command for multicast, and the second command is a long DRX Command for multicast. When the DRX Command received by the receiving end is that the sending end indicates that the receiving end uses the DRX long cycle, the DRX Command is essentially the long DRX Command for multicast. When the DRX Command received by the receiving end is that the sending end indicates that the receiving end uses the DRX short cycle, the DRX Command is essentially the DRX Command for multicast. The term "long" herein is relative. In other words, the "long DRX Command for multicast" in the present application may be referred to as the "DRX Command for multicast" and the "DRX Command for multicast" in the present application may also be referred to as a "short DRX Command for multicast". In fact, the wording of names of a command does not change the essence of an operation targeted by the command and is also not limited in the present application.

The present application provides a receiving method for a DRX Command. After receiving the DRX Command, the receiving end may use the DRX long cycle for multicast corresponding to the G-RNTI for the multicast session corresponding to the G-RNTI.

Specifically, when one or more multicast broadcast sessions become very sparse, the sending end may deliver the DRX Command (that is, the DRX Command herein is the long DRX Command for multicast that indicates that the receiving end uses the long DRX cycle for the one or more multicast sessions). Correspondingly, after receiving the DRX Command, no matter whether the DRX short cycle for multicast is configured in the preconfigured DRX pattern for multicast corresponding to the G-RNTI (that is, no matter whether the "DRX short cycle for multicast" corresponding to the G-RNTI is preconfigured), the receiving end uses the DRX long cycle for multicast and receives the one or more multicast sessions within the on duration in the DRX long cycle for multicast.

It is to be noted that the use of the DRX long cycle for multicast corresponding to the G-RNTI in the present application refers to the use of configuration parameters of the DRX long cycle for multicast corresponding to the G-RNTI, that is, essentially, using the DRX long cycle for multicast corresponding to the G-RNTI.

The present application further provides a receiving method for a DRX Command. After the receiving end receives the DRX Command, the receiving end determines whether the on duration timer for multicast corresponding to the G-RNTI is operating, and if so, the receiving end stops the on duration timer of the DRX for the G-RNTI.

It is to be noted herein that the essence of the operation herein is to stop the on duration timer of the DRX for the G-RNTI, determining whether the on duration timer is currently operating is only to ensure the right execution of the receiving method. However, the receiving end may directly stop the on duration timer of the DRX for the G-RNTI without determining whether the on duration timer is currently operating.

The present application further provides a receiving method for a DRX Command. After the receiving end receives the DRX Command, the receiving end determines whether the inactivity timer for multicast in the DRX pattern for multicast corresponding to the G-RNTI is operating, and if so, the receiving end stops the inactivity timer of the DRX for the G-RNTI.

It is to be noted herein that the essence of the operation herein is to stop the inactivity timer of the DRX for the G-RNTI, determining whether the inactivity timer is currently operating is only to ensure the right execution of the receiving method. However, the receiving end may directly stop the inactivity timer of the DRX for the G-RNTI without determining whether inactivity timer is currently operating.

The present application further provides a receiving method for a DRX Command. After the receiving end receives the DRX Command, the receiving end determines whether the DRX short cycle counter for multicast corresponding to the G-RNTI is operating, and if so, the receiving end stops the DRX short cycle counter for multicast.

It is to be noted herein that the essence of the operation herein is to stop the DRX short cycle counter for multicast, determining whether the DRX short cycle counter for multicast is currently operating is only to ensure the right execution of the receiving method, and the receiving end may directly stops the DRX short cycle counter for multicast without determining whether the DRX short cycle counter for multicast is currently operating.

For example, in the communication system, both a user equipment B and a user equipment C receive a session B, the session B is in a very sparse transmission state, and the sending end preconfigures a DRX pattern₂ for multicast of a G-RNTI₂ corresponding to the session B for the receiving ends B and C (that is, a set of parameters corresponding to the G-RNTI₂ and used for DRX are configured) and sends the DRX Command for the session B. Moreover, after receiving the DRX Command, the receiving ends B and C use a DRX long cycle for multicast in a DRX pattern for multicast corresponding to the G-RNTI₂, operate a DRX long cycle timer for multicast corresponding to the G-RNTI₂ and stop the operations of a DRX on duration timer of the DRX for the G-RNTI₂ and an inactivity timer of the DRX for the G-RNTI₂.

It is to be noted that for the multicast session corresponding to the G-RNTI in the present application, the used DRX cycle and timers and counters in the operated DRX cycle correspond to each other.

The present application provides a receiving method for a DRX Command. When the receiving end receives the DRX Command and has configured the DRX short cycle for multicast corresponding to the G-RNTI:
the receiving end may use the DRX short cycle for multicast in the DRX pattern for multicast corresponding to the G-RNTI for the multicast session corresponding to the G-RNTI.

Specifically, when one or more multicast broadcast sessions become sparse, the sending end may deliver the DRX Command (that is, the DRX Command herein is the DRX Command for multicast that indicates that a user equipment uses the DRX short cycle for the one or more multicast sessions). Correspondingly, after receiving the DRX Command, the receiving end first uses the DRX short cycle for multicast according to the DRX short cycle for multicast in the configured DRX pattern for multicast to receive the one or more multicast sessions in a corresponding DRX manner for multicast. For example, the communication system has a session A and a user equipment A, a user equipment B and a user equipment C that receive the session A. If finding that the session A becomes sparse, the sending end delivers the DRX Command, and after receiving the DRX Command, the receiving ends A, B and C use a DRX short cycle for multicast corresponding to a G-RNTI corresponding to the session A for the session A to start a corresponding receiving circuit so as to receive the session A within the on duration for multicast or the inactivity for multicast in the DRX short cycle for multicast and to close the corresponding receiving circuit to not to perform a receiving operation in the opportunity for DRX in the DRX short cycle for multicast.

The present application provides a receiving method for a DRX Command. When the receiving end receives the DRX Command and has configured the DRX short cycle for multicast corresponding to the G-RNTI:
the receiving end may start the DRX short cycle counter for multicast corresponding to the G-RNTI for the multicast session corresponding to the G-RNTI.

Specifically, when one or more multicast broadcast sessions become sparse, the sending end may deliver the DRX Command (that is, the DRX Command herein is the DRX Command for multicast that indicates that a user equipment uses the DRX short cycle for the one or more multicast sessions). Correspondingly, after receiving the DRX Command, the receiving end receives the one or more multicast sessions using continuous DRX short cycles for multicast according to the DRX short cycle counter for multicast in the DRX pattern for multicast. For example, the communication system has the session A and the user equipment A, the user equipment B and the user equipment C that receive the session A. When finding that the session A becomes sparse, the sending end delivers the DRX Command for multicast. After receiving the DRX Command, for the session A, if the number of times of DRX short cycles for multicast in the DRX pattern for multicast corresponding to the G-RNTI corresponding to the session A is preconfigured to be two, the receiving ends A, B and C, use the first corresponding DRX short cycle for multicast and continue to use the second DRX short cycle for multicast after ending the first DRX short cycle for multicast. The present application provides a receiving method for a DRX Command. The receiving end starts the DRX short cycle counter for multicast corresponding to the G-RNTI in the first symbol after receiving the DRX Command.

In other words, when receiving the DRX Command (that is, the DRX Command herein is the DRX Command for multicast that indicates that a user equipment uses the DRX short cycle for the multicast session), the receiving end starts the DRX short cycle counter for multicast corresponding to the G-RNTI in the first symbol after receiving the DRX Command, thereby using one or more DRX short cycles for multicast indicated by the count value of the DRX short cycle counter for multicast.

The present application provides a receiving method for a DRX Command. When having configured the DRX short cycle for multicast corresponding to the G-RNTI and receiving the DRX Command, the receiving end performs the following operations for the multicast session corresponding to the G-RNTI.

The receiving end uses the DRX short cycle for multicast corresponding to the G-RNTI.

The receiving end starts the DRX short cycle counter for multicast corresponding to the G-RNTI.

For the multicast session corresponding to the G-RNTI in the present application, the used DRX cycle and timers and counters in the operated DRX cycle correspond to each other.

For example, in the communication system, both the user equipment A and the user equipment B receive the session A, the session A is in a sparse state, and the sending end preconfigures the DRX pattern₁ for multicast corresponding to the G-RNTI₁ corresponding to the session A for the receiving ends A and B (that is, the set of parameters corresponding to the G-RNTI₁ and used for the DRX are configured for the receiving end) and sends the DRX Command for the session A. Moreover, after receiving the DRX Command, the receiving ends A and B use the DRX short cycle for multicast in the DRX pattern₁ for multicast corresponding to the G-RNTI₁ and start the DRX short cycle timer for multicast and the DRX short cycle counter for multicast that correspond to the G-RNTI₁.

The present application provides a receiving method for a DRX Command. When the receiving end receives the DRX Command and does not configure the DRX short cycle for multicast corresponding to the G-RNTI:
the receiving end may use the DRX long cycle for multicast corresponding to the G-RNTI for the multicast session corresponding to the G-RNTI.

Specifically, when the receiving end receives the DRX Command (that is, the DRX Command herein is the DRX Command for multicast that indicates that the receiving end uses the DRX short cycle for the multicast session), if the DRX pattern for multicast corresponding to the G-RNTI received by the receiving end does not include the DRX short cycle for multicast (that is, the receiving end does not configure parameters of the "DRX short cycle for multicast" corresponding to the G-RNTI), the receiving end uses the DRX long cycle for multicast in the DRX pattern for multicast corresponding to the G-RNTI for the multicast session corresponding to the G-RNTI.

The present application provides a receiving method for a DRX Command. The method includes the steps below.

If the receiving end receives the DRX Command and has configured the DRX short cycle for multicast corresponding to the G-RNTI, the receiving end performs the following operations for the multicast session corresponding to the G-RNTI.

The receiving end uses the DRX short cycle for multicast corresponding to the G-RNTI.

The receiving end starts the DRX short cycle counter for multicast corresponding to the G-RNTI.

If the receiving end receives the DRX Command and does not configure the DRX short cycle for multicast corresponding to the G-RNTI, the receiving end performs the following operation for the multicast session corresponding to the G-RNTI.

The receiving end uses the DRX long cycle for multicast corresponding to the G-RNTI.

The present application provides a receiving method for a DRX Command. The DRX Command has a fixed size of 0 bits.

Specifically, that the DRX Command has the fixed size of 0 bits refers to that the DRX Command does not include any G-RNTI or any information.

The DRX Command provided in the present application is the MAC layer message. The MAC layer message herein refers to the MAC CE. The MAC CE has a corresponding MAC subheader. The MAC CE and the MAC subheader jointly form an MAC sub protocol data unit (subPDU). That the DRX Command has the fixed size of 0 bis refers to that the MAC CE has a fixed size of 0 bits.

When the MAC subheader includes an R and a logical channel identifier (LCID), the MAC CE is a fixed-sized MAC CE. When the MAC subheader includes the R, an F, the LCID and an L, the MAC CE is a variable-sized MAC CE. The MAC subheader further includes other structures that are not enumerated herein. Correspondingly, to enable the receiving end to obtain the received MAC layer message as the DRX Command to receive the multicast session in the DRX manner, in the present application, the LCID in the MAC subheader may be configured to indicate the type of the MAC CE as the DRX Command. The specific indication process may be described below.

The present application provides a receiving method for a DRX Command. The MAC subheader includes the LCID. The LCID may be configured to indicate the MAC CE as the DRX Command (a unicast DRX Command or a unicast long DRX Command).

When the receiving end monitors the PDCCH addressed to the G-RNTI, the value of the LCID received by the receiving end indicates the type of the MAC CE as the DRX Command (the DRX Command is the unicast DRX Command or the unicast long DRX Command). In this case, no matter whether the MAC CE corresponding to the LCID includes a G-RNTI (this G-RNTI is not limited to the same as other G-RNTIs in this paragraph, for example, the G-RNTI for scrambling the PDCCH), that is, the MAC CE has a size of 0 bits or includes at least one G-RNTI, for the multicast session corresponding to the G-RNTI scrambling the PDCCH, the receiving end uses the DRX cycle corresponding to the G-RNTI (the DRX cycle is the DRX short cycle for multicast or the DRX long cycle for multicast ).

When the receiving end monitors the PDCCH addressed to the C-RNTI, the LCID received by the receiving end indicates the MAC CE as the unicast DRX Command or the unicast long DRX Command.

If a further analysis reveals that when the MAC CE includes no G-RNTI, the receiving end uses an existing unicast DRX short cycle or unicast DRX long cycle for a received unicast session.

Specifically, with reference to the value assignment of the LCID of 3GPP TS 38.321, the first LCID value assignment table is provided. As described in Table 1, when the value of the LCID is 59, the LCID indicates the MAC CE as the unicast long DRX Command; when the value of the LCID is 60, the LCID indicates the MAC CE as the unicast DRX Command. Therefore, when the receiving end monitors the PDCCH addressed to the C-RNTI, the value of the LCID received by the receiving end is 59, and the MAC CE includes no G-RNTI, the receiving end uses the existing unicast DRX long cycle for the received unicast session. Moreover, when the receiving end monitors the PDCCH addressed to the C-RNTI, the value of the LCID received by the receiving end is 60, and the MAC CE includes no G-RNTI, the receiving end uses the existing unicast DRX short cycle for the received unicast session.

**Table 1 the first LCID value assignment table**

| Codepoint/Index | LCID values |
|---|---|
| 0 | CCCH |
| 1 - 32 | Identity of the logical channel |
| 33 | Extended logical channel ID field (two-octet eLCID field) |
| 34 | Extended logical channel ID field (one-octet eLCID field) |
| 35 - 46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

When the MAC CE includes one G-RNTI, only for the multicast session corresponding to the G-RNTI, the receiving end uses a DRX short cycle for multicast corresponding to the G-RNTI or a DRX long cycle for multicast corresponding to the G-RNTI. Correspondingly, the MAC CE further includes one session ID or TMGI, and the receiving end uses a DRX long cycle for multicast corresponding to the session ID or TMGI. The operation of including the session ID or TMGI is the same as the operation of including the G-RNTI and thereby is not repeated.

When the MAC CE includes multiple G-RNTIs, for multiple multicast sessions corresponding to the multiple G-RNTIs and received by the receiving end, the receiving end may also use a DRX short cycle for multicast or a DRX long cycle for multicast that corresponds to each multicast session. It is to be noted herein that for each G-RNTI included in the MAC CE, whether the receiving end is in a user group corresponding to the each G-RNTI is determined sequentially, that is, whether the receiving end receives a multicast session corresponding to the each G-RNTI. If not, the each G-RNTI is neglected, and an operation is not performed. If so, for the the multicast session of the each G-RNTI, the receiving end uses a DRX short cycle for multicast or a DRX long cycle for multicast that corresponds to the each G-RNTI. Correspondingly, the MAC CE includes multiple session IDs or TMGIs, and the receiving end uses DRX long cycles for multicast corresponding to the multiple session IDs or TMGIs. The operation of including the multiple session IDs or TMGIs is the same as the operation of including the multiple G-RNTIs and thereby is not repeated.

Further, in this embodiment, not only can the receiving end use the DRX cycle for multicast for the multicast session, but the existing communication protocol can also be prevented from being altered and adjusted to avoid increasing the complexity of the communication system.

The present application provides a receiving method for a DRX Command. The MAC subheader includes the LCID. The LCID may be configured to indicate the MAC CE as the DRX Command (a common DRX Command or a common long DRX Command).

It is to be noted that the common DRX Command herein is only configured to indicate that the receiving end uses the DRX cycle to receive the session in the DRX manner, is not limited to an indication that the receiving end uses a unicast DRX cycle for the unicast session, or is limited to an indication that the receiving end uses the DRX cycle for the multicast session.

In the present application, a common DRX pattern is preconfigured for all sessions received by the receiving end corresponding to the C-RNTI. The DRX pattern includes: a common on duration timer; a common inactivity timer; a common DRX long cycle; a common DRX long cycle start subframe; a common DRX long cycle start slot; a common DRX short cycle; and a common DRX short cycle counter.

When the receiving end monitors the PDCCH addressed to the G-RNTI, the LCID received by the receiving end indicates the MAC CE as the common DRX Command or the common long DRX Command. No matter whether the MAC CE includes the G-RNTI, for the multicast session corresponding to the G-RNTI, the receiving end uses the DRX short cycle for multicast or the DRX long cycle for multicast that corresponds to the G-RNTI. It is to be noted that in the present application, an MAC CE for the common DRX Command may be often denoted as "Common DRX Command MAC CE", "Common DRX Command", or other terms, and this is not limited in the present application. Correspondingly, an MAC CE for the common long DRX Command may be often denoted as "Common Long DRX Command MAC CE", "Common Long DRX Command" or other similar terms, and this is not limited in the present application.

When the receiving end monitors the PDCCH scrambled by the C-RNTI, the LCID received by the receiving end indicates the MAC CE as the common DRX Command or the common long DRX Command.

If a further analysis reveals that when the MAC CE includes no G-RNTI, the receiving end uses the common DRX short cycle or a common DRX long cycle for all received sessions. It is to be noted herein that when using the DRX short cycle for all the received sessions, for a multicast session corresponding to the each G-RNTI, if the DRX pattern for multicast corresponding to the each G-RNTI has been configured, the receiving end uses the DRX short cycle for multicast corresponding to the DRX pattern for multicast. Otherwise, the receiving end uses a common DRX short cycle for multicast corresponding to a common DRX pattern for multicast or uses a common DRX short cycle corresponding to a common DRX pattern. For the unicast session, if a set of DRX patterns for the unicast session have been configured for the receiving end corresponding to the C-RNTI, the receiving end uses the DRX short cycle corresponding to the DRX pattern of the unicast session. Otherwise, the receiving end uses the common DRX short cycle corresponding to the common DRX pattern. The same holds true for the long cycle, which is not repeated herein.

In an optional implementation, the values of the LCID are described in Table 2 below. For example, when the value of the LCID is 64, the LCID indicates the MAC CE as the common long DRX Command; when the value of the LCID is 65, the LCID indicates the MAC CE as the common DRX Command. Therefore, when the receiving end monitors the PDCCH addressed to the C-RNTI, the value of the LCID received by the receiving end is 64, and the MAC CE includes no G-RNTI, the receiving end uses the common DRX long cycle for all the received sessions. Moreover, when the receiving end monitors the PDCCH addressed to the C-RNTI, the value of the LCID received by the receiving end is 65, and the MAC CE includes no G-RNTI, the receiving end uses the common DRX short cycle for all the received sessions.

**Table 2 the second LCID value assignment table**

| Codepoint/Index | LCID values |
|---|---|
| 0 | CCCH |
| 1 - 32 | Identity of the logical channel |
| 33 | Extended logical channel ID field (two-octet eLCID field) |
| 34 | Extended logical channel ID field (one-octet eLCID field) |
| 35 - 46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |
| 64 | Common Long DRX Command |
| 65 | Common DRX Command |

When the MAC CE includes one G-RNTI, only for the multicast session corresponding to the G-RNTI, the receiving end uses a DRX short cycle for multicast corresponding to the G-RNTI or a DRX long cycle for multicast corresponding to the G-RNTI. Correspondingly, the MAC CE further includes one session ID or TMGI, and the receiving end uses a DRX short cycle for multicast or a DRX long cycle for multicast that corresponds to the session ID or TMGI. The operation of including the session ID or TMGI is the same as the operation of including the G-RNTI and thereby is not repeated.

When the MAC CE includes multiple G-RNTIs, for multiple multicast sessions corresponding to the multiple G-RNTIs and received by the receiving end, the receiving end may also use a DRX short cycle for multicast or a DRX long cycle for multicast that corresponds to each multicast session. It is to be noted herein that for each G-RNTI included in the MAC CE, whether the receiving end is in a user group corresponding to the each G-RNTI is determined sequentially, that is, whether the receiving end receives a multicast session corresponding to the each G-RNTI. If not, the each G-RNTI is neglected, and an operation is not performed. If so, for the multicast session of the each G-RNTI, the receiving end uses a DRX short cycle for multicast or a DRX long cycle for multicast that corresponds to the each G-RNTI.

The present application provides a receiving method for a DRX Command. The MAC subheader includes the LCID. The LCID may be configured to indicate the MAC CE as the DRX Command (the DRX Command for multicast or the long DRX Command for multicast).

It is to be noted that in the present application, a common DRX pattern for multicast has been preconfigured for all multicast sessions received by the receiving end corresponding to the C-RNTI. The common DRX pattern for multicast includes: a common on duration timer for multicast; a common inactivity timer for multicast; a common DRX long cycle for multicast; a common DRX long cycle start subframe for multicast; a common DRX long cycle start slot for multicast; a common DRX short cycle for multicast; and a common DRX short cycle counter for multicast.

When the receiving end monitors the PDCCH addressed to the G-RNTI, the LCID received by the receiving end indicates the MAC CE as the DRX Command for multicast or the long DRX Command for multicast. No matter whether the MAC CE includes the G-RNTI, for the multicast session corresponding to the G-RNTI, the receiving end may still use the DRX short cycle for multicast or the DRX long cycle for multicast that corresponds to the G-RNTI. It is to be noted that in the present application, an MAC CE for the DRX Command for multicast may be often denoted as "DRX Command MAC CE for multicast", "DRX Command for multicast", "PTM DRX Command MAC CE", or other similar terms, and this is not limited in the present application. Correspondingly, an MAC CE for the long DRX Command for multicast may be often denoted as "Long DRX Command MAC CE for multicast", "Long DRX Command for multicast", "PTM Long DRX Command MAC CE", or other similar terms, and this is not limited in the present application.

When the receiving end monitors the PDCCH addressed to the C-RNTI, the LCID received by the receiving end indicates the MAC CE as the DRX Command for multicast or the long DRX Command for multicast.

If a further analysis reveals that when the MAC CE includes no G-RNTI, the receiving end uses the DRX short cycle for multicast or the DRX long cycle for multicast for all received multicast sessions. It is to be noted herein that when using the DRX short cycle for multicast for all the received multicast sessions, for the multicast session corresponding to the each G-RNTI, if the DRX pattern for multicast corresponding to the each G-RNTI is configured, the receiving end uses the DRX short cycle for multicast corresponding to the DRX pattern for multicast. Otherwise, the receiving end uses the common DRX short cycle for multicast corresponding to the common DRX pattern for multicast. The same holds true for the long cycle, which is not repeated herein.

In an optional implementation method, the values of the LCID are described in Table 3 below. For example, when the value of the LCID is 64, the LCID indicates the MAC CE as the long DRX Command for multicast; and when the value of the LCID is 65, the LCID indicates the MAC CE as the DRX Command for multicast. Therefore, when the receiving end monitors the PDCCH addressed to the C-RNTI, the value of the LCID received by the receiving end is 64, and the MAC CE includes no G-RNTI, the receiving end uses the DRX long cycle for multicast for all the received multicast sessions. Moreover, when the receiving end monitors the PDCCH addressed to the C-RNTI, the value of the LCID received by the receiving end is 65, and the MAC CE includes no G-RNTI, the receiving end uses the DRX short cycle for multicast for all the received multicast sessions.

**Table 3 the third LCID value assignment table**

| Codepoint/Index | LCID values |
|---|---|
| 0 | CCCH |
| 1 - 32 | Identity of the logical channel |
| 33 | Extended logical channel ID field (two-octet eLCID field) |
| 34 | Extended logical channel ID field (one-octet eLCID field) |
| 35 - 46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |
| 64 | Multicast Long DRX Command |
| 65 | Multicast DRX Command |

When the MAC CE includes one G-RNTI, only for the multicast session corresponding to the G-RNTI, the receiving end uses a DRX short cycle for multicast or a DRX long cycle for multicast that corresponds to the G-RNTI. Correspondingly, the MAC CE further includes one session ID or TMGI, and the receiving end uses a DRX short cycle for multicast or a DRX long cycle for multicast that corresponds to the session ID or TMGI. The operation of including the session ID or TMGI is the same as the operation of including the G-RNTI and thereby is not repeated.

When the MAC CE includes multiple G-RNTIs, for multiple multicast sessions corresponding to the multiple G-RNTIs and received by the receiving end, the receiving end may also use a DRX short cycle for multicast or a DRX long cycle for multicast that corresponds to each multicast session. It is to be noted herein that for each G-RNTI included in the MAC CE, whether the receiving end is in a user group corresponding to the each G-RNTI is determined sequentially, that is, whether the receiving end receives the multicast session corresponding to the each G-RNTI. If not, the each G-RNTI is neglected, and an operation is not performed. If so, for the multicast session corresponding to the each G-RNTI, the receiving end uses a DRX short cycle for multicast or a DRX long cycle for multicast that corresponds to the each G-RNTI. Correspondingly, the MAC CE may further include multiple session IDs or TMGIs, and the receiving end uses DRX short cycles for multicast or DRX long cycles for multicast that correspond to the multiple session IDs or TMGIs. The operation of including the multiple session IDs or TMGIs is the same as the operation of including the multiple G-RNTIs and thereby is not repeated.

The present application provides a receiving method for a DRX Command. The MAC subheader includes the LCID. The LCID may be configured to indicate the MAC CE as the DRX Command (a DRX Command for multicast corresponding to the G-RNTI or a long DRX Command for multicast corresponding to the G-RNTI).

When the receiving end monitors the PDCCH addressed to the G-RNTI, the LCID received by the receiving end indicates the MAC CE as the DRX Command for multicast corresponding to the G-RNTI or the long DRX Command for multicast corresponding to the G-RNTI. No matter whether the MAC CE includes the G-RNTI, for the multicast session corresponding to the G-RNTI, the receiving end may still use the DRX short cycle for multicast or the DRX long cycle for multicast that corresponds to the G-RNTI.

When the receiving end monitors the PDCCH addressed to the C-RNTI, the LCID received by the receiving end indicates the MAC CE as the DRX Command for multicast corresponding to the G-RNTI or the long DRX Command for multicast corresponding to the G-RNTI.

If a further analysis reveals that when the MAC CE includes no G-RNTI, only for the multicast session corresponding to the G-RNTI, the receiving end uses the DRX short cycle for multicast or the DRX long cycle for multicast that corresponds to the G-RNTI.

In an optional implementation method, the values of the LCID are described in Table 4 below. For example, when the value of the LCID is 64, the LCID indicates the MAC CE as a long DRX Command for multicast corresponding to a G-RNTI₁; when the value of the LCID is 65, the LCID indicates the MAC CE as a DRX Command for multicast corresponding to the G-RNTI₁; when the value of the LCID is 66, the LCID indicates the MAC CE as a long DRX Command for multicast corresponding to a G-RNTI₂; when the value of the LCID is 67, the LCID indicates the MAC CE as a DRX Command for multicast corresponding to the G-RNTI₂, ..., when the value of the LCID is 63 + 2N - 1, the LCID indicates the MAC CE as a long DRX command for multicast corresponding to a G-RNTI_{N}; and when the value of the LCID is 63 + 2N, the LCID indicates the MAC CE as a DRX Command for multicast corresponding to the G-RNTI_{N}. Therefore, when the receiving end monitors the PDCCH addressed to the C-RNTI, the value of the LCID received by the receiving end is 64, and the MAC CE includes no G-RNTI, the receiving end uses a DRX long cycle for multicast corresponding to the G-RNTI₁ for the received multicast session corresponding to the G-RNTI₁. Moreover, when the receiving end monitors the PDCCH addressed to the C-RNTI, the value of the LCID received by the receiving end is 65, and the MAC CE includes no G-RNTI, the receiving end uses a DRX short cycle for multicast corresponding to the G-RNTI₁ for the received multicast session corresponding to the G-RNTI₁.

**Table 4 the fourth LCID value assignment table**

| Codepoint/Index | LCID values |
|---|---|
| 0 | CCCH |
| 1 - 32 | Identity of the logical channel |
| 33 | Extended logical channel ID field (two-octet eLCID field) |
| 34 | Extended logical channel ID field (one-octet eLCID field) |
| 35 - 46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |
| 64 | G-RNTI₁ Long DRX Command |
| 65 | G-RNTI₁ DRX Command |
| 66 | G-RNTI₂ Long DRX Command |
| 67 | G-RNTI₂ DRX Command |
| ... | ... |
| 63+2N-1 | G-RNTI_{N} Long DRX Command |
| 63+2N | G-RNTI_{N} DRX Command |

When the MAC CE includes one G-RNTI, for a multicast session corresponding to the G-RNTI, the receiving end uses a DRX short cycle for multicast or a DRX long cycle for multicast that corresponds to the G-RNTI. It is to be noted that the G-RNTI included in the MAC CE herein is the same as the G-RNTI indicated by the LCID received by the receiving end. Correspondingly, the MAC CE further includes one session ID or TMGI, and the receiving end uses a DRX short cycle for multicast or a DRX long cycle for multicast that corresponds to the session ID or TMGI. The operation of including the session ID or TMGI is the same as the operation of including the G-RNTI and thereby is not repeated.

When the MAC CE includes multiple G-RNTIs, for multiple multicast sessions corresponding to the multiple G-RNTIs and received by the receiving end, the receiving end may also use a DRX short cycle for multicast or a DRX long cycle for multicast that corresponds to each multicast session. It is to be noted herein that for each G-RNTI included in the MAC CE, whether the receiving end is in a user group corresponding to the each G-RNTI is determined sequentially, that is, whether the receiving end receives the multicast session corresponding to the each G-RNTI. If not, the each G-RNTI is neglected, and an operation is not performed. If so, for the multicast session corresponding to the each G-RNTI, the receiving end uses a DRX short cycle for multicast or a DRX long cycle for multicast that corresponds to the each G-RNTI. Correspondingly, the MAC CE further includes multiple session IDs or TMGIs, and the receiving end uses DRX short cycles for multicast or DRX long cycles for multicast that correspond to the multiple session IDs or TMGIs. The operation of including the multiple session IDs or TMGIs is the same as the operation of including the multiple G-RNTIs and thereby is not repeated.

Further, for the preceding "Common Long DRX Command and Common DRX Command", "Long DRX Command and Multicast DRX Command for multicast", "G-RNTI₁ Long DRX Command MAC CE and G-RNTI₁ DRX Command MAC CE", "G-RNTI₂ Long DRX Command MAC CE and G-RNTI₂ DRX Command MAC CE", ..., and "G-RNTI_{N} Long DRX Command MAC CE and G-RNTI_{N} DRX Command MAC CE", any combination may be added to the LCID value assignment tables.

The present application further provides a sending method for a DRX Command. The DRX Command is the MAC layer message. The G-RNTI and/or temporary mobile group identifier and/or session identifier are indicated by the DRX Command and/or an MAC subheader corresponding to the DRX Command.

Specifically, when the DRX Command sent by the sending end is the MAC layer message, the G-RNTI and/or temporary mobile group identifier and/or session identifier may be indicated by the DRX Command, that is, the MAC layer message, and may be sent to the receiving end, or the G-RNTI and/or temporary mobile group identifier and/or session identifier are indicated by an MAC subheader corresponding to the MAC layer message and are sent to the receiving end, or the G-RNTI and/or temporary mobile group identifier and/or session identifier are indicated by the MAC layer message and an MAC subheader corresponding to the MAC layer message and are sent to the receiving end so that the receiving end can receive the at least one multicast session corresponding to the G-RNTI and/or the temporary mobile group identifier and/or the session identifier in the DRX manner after receiving the MAC layer message and the MAC subheader corresponding to the MAC layer message.

It is to be noted herein that in the present application, the manner of indicating the G-RNTI is not limited, the G-RNTI and/or the temporary mobile group identifier and/or the session identifier may be directly included in the DRX Command and/or the MAC subheader corresponding to the DRX Command, or information corresponding to the G-RNTI and/or the temporary mobile group identifier and/or the session identifier is marked in the DRX Command and/or the MAC subheader corresponding to the DRX Command.

Optionally, the present application further provides a receiving method for a DRX Command. The G-RNTI and/or the temporary mobile group identifier and/or the session identifier are indicated by the DRX Command and/or the MAC subheader corresponding to the DRX Command.

Specifically, when the DRX Command of the receiving end is the MAC layer message, that is, the MAC CE, whether the G-RNTI is indicated by the MAC CE may be further determined, whether the G-RNTI is indicated by the MAC subheader corresponding to the MAC CE is determined, or whether the G-RNTI is indicated by the MAC CE and the MAC subheader corresponding to the MAC CE is determined. If any one of the preceding situations is satisfied, the receiving end receives the multicast session corresponding to the G-RNTI in the DRX manner.

Optionally, the present application further provides a receiving method for a DRX Command. The DRX Command at least includes the G-RNTI. Specifically, in this case, the DRX Command may include one G-RNTI or multiple G-RNTIs.

When the DRX Command is the MAC CE, no matter whether the MAC CE includes only one G-RNTI, multiple G-RNTIs, or no G-RNTI, after receiving the MAC CE, the receiving end needs to use the corresponding DRX cycle in conjunction with the scrambling situation of the PDCCH and the indication situation of the MAC subheader corresponding to the MAC CE. The specific operation has been clearly described in the preceding and thereby is not repeated herein.

It is to be noted that the MAC CE may include the G-RNTI in a way that the G-RNTI is directly included or that a session identifier corresponding to the G-RNTI is included, where the session identifier may be referred to as the session ID.

It is to be noted that the MAC CE may directly include at least one G-RNTI and/or corresponding session ID and/or corresponding session ID or may include no G-RNTI and/or no session ID and/or no session ID, that is, the MAC CE has a size of 0 bits.

Four embodiments are provided below to specify the implementation process of the present application.

### Embodiment one

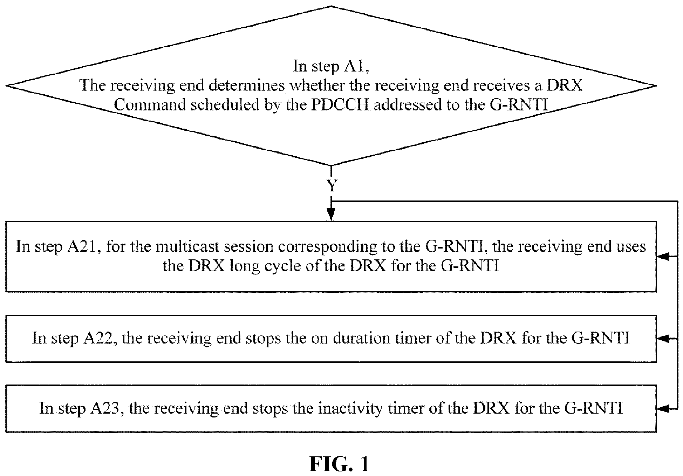

This embodiment provides another receiving manner for a DRX Command. As shown in FIG. 1, the manner includes the process below.

In step A1, the receiving end determines whether the receiving end receives the DRX Command scheduled by the PDCCH addressed to the G-RNTI, and if so, the method goes to step A21 to step A23.

In step A21, for the multicast session corresponding to the G-RNTI, the receiving end uses the DRX long cycle of the DRX for the G-RNTI.

In step A22, the receiving end stops the on duration timer of the DRX for the G-RNTI.

In step A23, the receiving end stops the inactivity timer of the DRX for the G-RNTI.

When step A22 is performed, the receiving end may directly stop the on duration timer of the DRX for the G-RNTI. Alternatively, the receiving end may predetermine whether the on duration timer in the DRX pattern for multicast corresponding to the G-RNTI is operating, and if so, the receiving end stops the on duration timer of the DRX for the G-RNTI. The two operations are essentially the same except that the latter has a higher stability in the execution of an algorithm during the operation process.

When step A23 is performed, the receiving end may directly stop the inactivity timer of the DRX for the G-RNTI. Alternatively, the receiving end may predetermine whether the inactivity timer in the DRX pattern for multicast corresponding to the G-RNTI is operating, and if so, the receiving end stops the inactivity timer of the DRX for the G-RNTI. The two operations are essentially the same except that the latter has a higher stability in the execution of an algorithm during the operation process.

Optionally, when this embodiment is performed, step A24 may also be performed. In step A24, the receiving end stop the DRX short cycle counter for multicast. Alternatively, the receiving end predetermines whether the DRX short cycle counter for multicast in the DRX pattern for multicast corresponding to the G-RNTI is operating, and if so, the receiving end stops the DRX short cycle counter for multicast. The operation of the DRX short cycle counter for multicast is considered in this step to enable the receiving end to use the DRX long cycle for multicast corresponding to the G-RNTI normally without interference. Further, when step A24 is performed, the receiving end stops the DRX short cycle counter for multicast corresponding to the G-RNTI in the first symbol after receiving the DRX Command.

This embodiment is often applied to the following scenario:
the multicast session corresponding to the G-RNTI becomes very sparse in a period of time.

In this embodiment, the received DRX Command in this case is the MAC CE. The MAC subheader corresponding to the MAC CE includes the LCID. The LCID is configured to indicate the MAC CE as the DRX Command.

The LCID may be configured to indicate the MAC CE as a DRX Command for a unicast session or a long DRX Command for a unicast session.

Alternatively, the LCID may be configured to indicate the MAC CE as the common DRX Command or the common long DRX Command.

Alternatively, the LCID may be configured to indicate the MAC CE as a DRX Command for all multicast sessions or a long DRX Command for all multicast sessions.

Alternatively, the LCID may be configured to indicate the MAC CE as a DRX Command for multicast corresponding to the G-RNTI, the session ID, or the TMGI or a long DRX Command for multicast corresponding to the G-RNTI, the session ID, or the TMGI.

The value of the LCID may be 59, 60, or others.

In this embodiment, the MAC CE may have a size of 0 bits; or the G-RNTI and/or session identifier corresponding to the G-RNTI, or the TMGI are included.

### Embodiment two

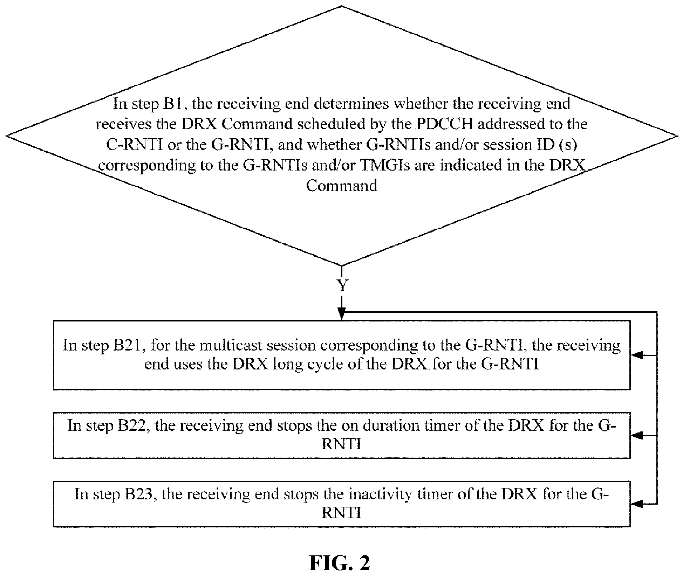

This embodiment provides another receiving manner for a DRX Command. As shown in FIG. 2, the manner includes the process below.

In step B 1, the receiving end determines whether the receiving end receives the DRX Command scheduled by the PDCCH addressed to the C-RNTI or the G-RNTI, and whether G-RNTIs and/or session ID (s) corresponding to the G-RNTIs and/or TMGIs are indicated by the DRX Command, and if so, the method goes to any one of step B21 to step B23.

In step B21, for the multicast session corresponding to the G-RNTI, the receiving end uses the DRX long cycle of the DRX for the G-RNTI.

In step B22, the receiving end stops the on duration timer of the DRX for the G-RNTI.

In step B23, the receiving end stops the inactivity timer of the DRX for the G-RNTI.

It is to be noted that in step B1, for the G-RNTI, the TMGI, or the session ID that are included in the MAC CE, each G-RNTI, each TMGI, or each session ID needs to be determined sequentially, and whether the receiving end is in a user group corresponding to the each G-RNTI or the each session ID is determined sequentially, that is, whether the receiving end receives a multicast session corresponding to the each G-RNTI or the each session ID is determined; if not, the each G-RNTI is neglected, and step B21 to step B23 are not performed; if so, step B21 to B23 are performed; and for the multicast session corresponding to the each G-RNTI or the each session ID, the receiving end uses the DRX short cycle for multicast or the DRX long cycle for multicast that corresponds to the each G-RNTI.

When step B22 is performed, the receiving end may directly stop the on duration timer of the DRX for the G-RNTI. Alternatively, the receiving end may predetermine whether the on duration timer in the DRX pattern for multicast corresponding to the G-RNTI is operating, and if so, the receiving end stops the on duration timer of the DRX for the G-RNTI. The two operations are essentially the same except that the latter has a higher stability in the execution of an algorithm during the operation process.

When step B23 is performed, the receiving end may directly stop the inactivity timer of the DRX for the G-RNTI. Alternatively, the receiving end may predetermine whether the inactivity timer in the DRX pattern for multicast corresponding to the G-RNTI is operating, and if so, the receiving end stops the inactivity timer of the DRX for the G-RNTI. The two operations are essentially the same except that the latter has a higher stability in the execution of an algorithm during the operation process.

Optionally, when this embodiment is performed, step B24 may also be performed. In step A24, the receiving end stops the DRX short cycle counter for multicast. Alternatively, the receiving end predetermines whether the DRX short cycle counter for multicast in the DRX pattern for multicast corresponding to the G-RNTI is operating, and if so, the receiving end stops the DRX short cycle counter for multicast. The operation of the DRX short cycle counter for multicast is considered in this step to enable the receiving end to use the DRX long cycle for multicast corresponding to the G-RNTI normally without interference. Further, when step B24 is performed, the receiving end stops the DRX short cycle counter for multicast corresponding to the G-RNTI in the first symbol after receiving the DRX Command.

This embodiment is often applied to the following scenario:
for the multicast session corresponding to the G-RNTI, the receiving end is scheduled through a dedicated channel; or when the current receiving end has limited power, among the currently received sessions, the multicast session corresponding to the G-RNTI, the TMGI, or the session ID each has a reduced priority.

In this embodiment, the received DRX Command in this case is the MAC CE. The MAC subheader corresponding to the MAC CE includes the LCID. The LCID is configured to indicate the MAC CE as the DRX Command.

When the MAC CE includes no G-RNTI, the LCID may be configured to indicate the MAC CE as the DRX Command.

When the MAC CE includes one G-RNTI, the LCID may be configured to indicate the MAC CE as the common DRX Command or the common long DRX Command; or the LCID may be configured to indicate the MAC CE as the DRX Command for multicast or the long DRX Command for multicast; or the LCID may be configured to indicate the MAC CE as the DRX Command for multicast corresponding to the G-RNTI, the session ID, or the TMGI or the long DRX Command for multicast corresponding to the G-RNTI, the session ID, or the TMGI.

When the MAC CE includes multiple G-RNTIs, the LCID may be configured to indicate the MAC CE as the common DRX Command or the common long DRX Command; or the LCID may be configured to indicate the MAC CE as the DRX Command for multicast or the long DRX Command for multicast.

In this embodiment, the MAC CE may have a size of 0 bits, and no G-RNTI is included, or one or more G-RNTIs and/or session IDs corresponding to the one or more G-RNTIs may also be included.

### Embodiment three

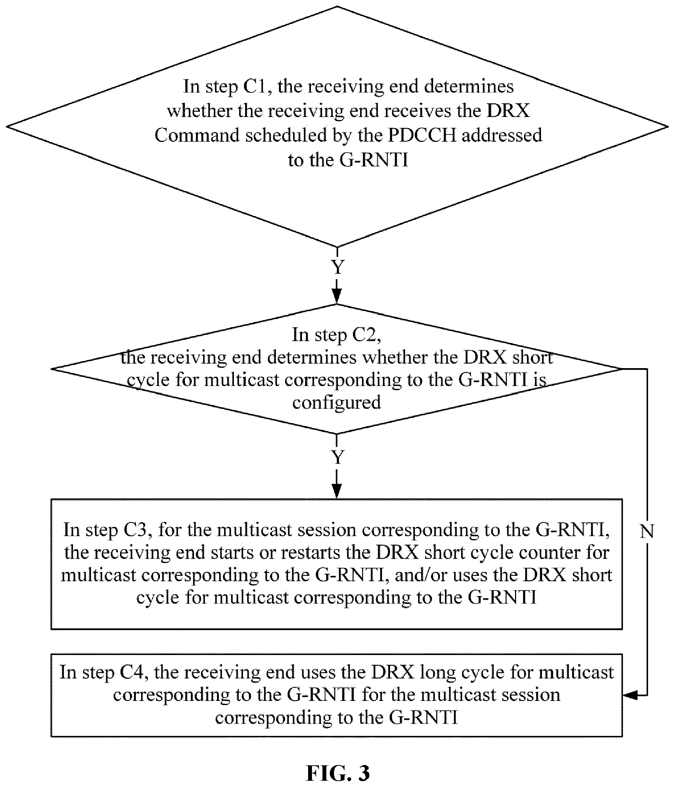

This embodiment provides a receiving method for a DRX Command. As shown in FIG. 3, the method includes the process below.

In step C1, the receiving end determines whether the receiving end receives the DRX Command scheduled by the PDCCH addressed to the G-RNTI, and if so, the method goes to step C2.

In step C2, the receiving end determines whether the DRX short cycle for multicast corresponding to the G-RNTI is configured, and if so, the method goes to step C3; if not, the method goes to step C4.

In step C3, for the multicast session corresponding to the G-RNTI, the receiving end starts or restarts the DRX short cycle counter for multicast corresponding to the G-RNTI, and/or uses the DRX short cycle for multicast corresponding to the G-RNTI.

In step C4, the receiving end uses the DRX long cycle for multicast corresponding to the G-RNTI for the multicast session corresponding to the G-RNTI.

In step C3 herein, the receiving end starts the DRX short cycle counter for multicast in the DRX pattern for multicast corresponding to the G-RNTI in the first symbol after receiving the DRX Command.

This embodiment is often applied to the following scenario:
the multicast session corresponding to the G-RNTI becomes very sparse in a period of time.

In this embodiment, the received DRX Command in this case is the MAC CE. The MAC subheader corresponding to the MAC CE includes the LCID. The LCID is configured to indicate the MAC CE as the DRX Command.

The LCID may be configured to indicate the MAC CE as the DRX Command for the unicast session or the long DRX Command for the unicast session.

Alternatively, the LCID may be configured to indicate the MAC CE as the common DRX Command or the common long DRX Command.

Alternatively, the LCID may be configured to indicate the MAC CE as the DRX Command for all the multicast sessions or the long DRX Command for multicast for all the multicast sessions.

Alternatively, the LCID may be configured to indicate the MAC CE as the DRX Command for multicast corresponding to the G-RNTI, the session ID, or the TMGI or the long DRX Command for multicast corresponding to the G-RNTI, the session ID, or the TMGI.

In this embodiment, the MAC CE may have a size of 0 bits; or the G-RNTI and/or session identifier corresponding to the G-RNTI, or the TMGI may also be included.

### Embodiment four

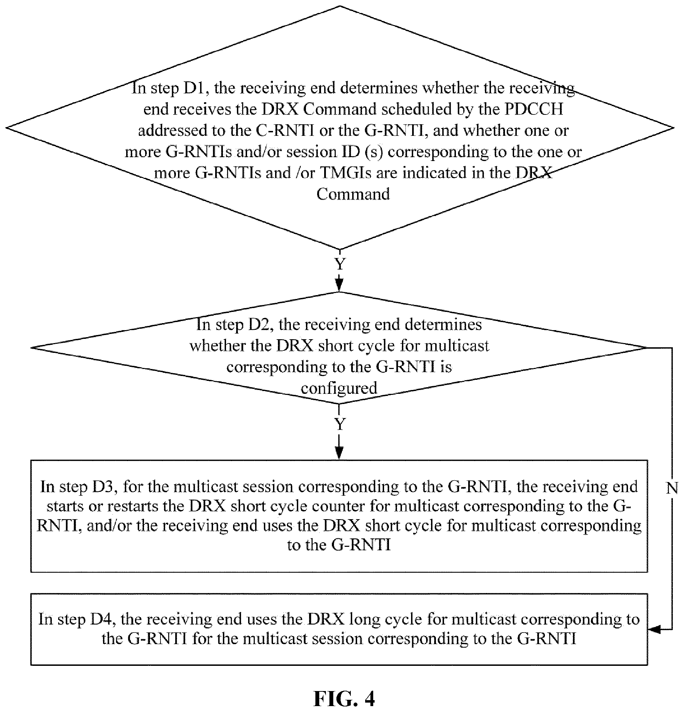

This embodiment provides a receiving manner for a DRX Command. As shown in FIG. 4, the manner includes the process below.

In step D1, the receiving end determines whether the receiving end receives the DRX Command scheduled by the PDCCH addressed to the C-RNTI or the G-RNTI, and whether one or more G-RNTIs and/or session ID (s) corresponding to the one or more G-RNTIs and /or TMGIs are indicated by the DRX Command, and if so, the method goes to step D2.

In step D2, the receiving end determines whether the DRX short cycle for multicast corresponding to the G-RNTI is configured, and if so, the method goes to step D3; if not, the method goes to step D4.

In step D3, for the multicast session corresponding to the G-RNTI, the receiving end starts or restarts the DRX short cycle counter for multicast corresponding to the G-RNTI, and/or the receiving end uses the DRX short cycle for multicast corresponding to the G-RNTI.

In step D4, the receiving end uses the DRX long cycle for multicast corresponding to the G-RNTI for the multicast session corresponding to the G-RNTI.

It is to be noted that in step D1, for the one or more G-RNTIs or the session ID(s) that are included in the MAC CE, each G-RNTI or each session ID needs to be determined sequentially, and whether the receiving end is in a user group corresponding to the each G-RNTI or the each session ID is determined sequentially, that is, whether the receiving end receives a multicast session corresponding to the each G-RNTI or the each session ID is determined; if not, the each G-RNTI is neglected, and step D2 to step D4 are not performed; if so, step D2 to D4 are performed; and for the multicast session corresponding to the each G-RNTI or the each session ID, the receiving end uses the DRX short cycle for multicast or the DRX long cycle for multicast that corresponds to the each G-RNTI.

In step D3, the receiving end starts the DRX short cycle counter for multicast in the DRX pattern for multicast corresponding to the G-RNTI in the first symbol after receiving the DRX Command.

This embodiment is often applied to the following scenario:
for the multicast session corresponding to the G-RNTI, the receiving end is scheduled through a dedicated channel; or when the current receiving end has limited power, among the currently received sessions, the multicast session corresponding to the G-RNTI or the session ID each has a reduced priority.

In this embodiment, the received DRX Command in this case is the MAC CE. The MAC subheader corresponding to the MAC CE includes the LCID. The LCID is configured to indicate the MAC CE as the DRX Command.

When the MAC CE includes no G-RNTI, no session ID, or no TMGI, the LCID may be configured to indicate the MAC CE as the common DRX Command or the common long DRX Command.

When the MAC CE includes one G-RNTI, one session ID, or one TMGI, the LCID may be configured to indicate the MAC CE as the common DRX Command or the common long DRX Command; or the LCID may be configured to indicate the MAC CE as the DRX Command for multicast or the long DRX Command for multicast; or the LCID may be configured to indicate the MAC CE as the DRX Command for multicast corresponding to the G-RNTI, the session ID, or the TMGI or the long DRX Command for multicast corresponding to the G-RNTI, the session ID, or the TMGI.

When the MAC CE includes multiple G-RNTIs, multiple session IDs, or multiple TMGIs, the LCID may be configured to indicate the MAC CE as the common DRX Command or the common long DRX Command; or the LCID may be configured to indicate the MAC CE as the DRX Command for multicast or the long DRX Command for multicast.

In this embodiment, the MAC CE may have a size of 0 bits; or one or more G-RNTIs and/or session IDs corresponding to the one or more G-RNTIs, or TMGIs may also be included.

The present application further provides a sending apparatus for a DRX. The apparatus includes a sending module.

The sending module is configured to send the DRX Command.

The apparatus further includes a scrambling module.

The scrambling module is connected to the sending module and is configured to use the G-RNTI to scramble the PDCCH scheduling the DRX Command.

The G-RNTI corresponds to the multicast session and is configured to indicate the group of user equipments receiving the multicast session.

The present application further provides a sending apparatus for a DRX. The apparatus includes a scrambling module.

The radio network temporary identifier includes the cell-radio network temporary identifier.

The scrambling module is configured to use the group-radio network temporary identifier or the cell-radio network temporary identifier to scramble the physical downlink control channel scheduling the DRX Command.

The apparatus further includes an indication module.

The indication module is connected to the sending module and is configured to indicate the group-radio network temporary identifier and/or temporary mobile group identifier and/or session identifier in the DRX Command and/or the medium access control subheader.

The sending end is configured to send the DRX Command.

Therefore, for a multicast session, the sending apparatus may learn in advance the patterns, frequencies and priorities of the arrivals of the different multicast sessions and may learn in advance the power situations and session receiving situations of the different receiving ends through information interaction with the sending apparatus and the receiving apparatus. Further, the sending module sends the DRX Command to control all user equipments or some user equipments that correspond to the sessions to receive the one or more sessions in the DRX manner or control the different user equipments to receive the one or more sessions of all the received sessions in the DRX manner.

The present application further provides a sending apparatus for a DRX Command. The sending module includes a first sending unit, a second sending unit, a third sending unit, a fourth sending unit and a fifth sending unit.

The first sending unit is configured to send the DRX Command when the DRX Command is the RRC layer message.

The second sending unit is configured to send the DRX Command when the DRX Command is a PHY message.

The third sending unit is configured to send the DRX Command when the DRX Command is an RLC layer message.

The fourth sending unit is configured to send the DRX Command when the DRX Command is a PDCP layer message.

The fifth sending unit is configured to send the DRX Command when the DRX Command is the MAC layer message.

The present application further provides a sending apparatus for a DRX Command. When the DRX Command is the MAC layer message, the indication module is configured to indicate the G-RNTI in the DRX Command and/or the MAC subheader corresponding to the DRX Command.

Specifically, when the DRX Command sent by the sending apparatus is the MAC layer message, the indication module may indicate the G-RNTI in the DRX Command, that is, the MAC layer message, and send the RNTI to a receiving apparatus, or may indicate the G-RNTI in the MAC subheader corresponding to the MAC layer message and send the G-RNTI to a receiving apparatus, or may indicate the G-RNTI in the MAC layer message and the MAC subheader corresponding to the MAC layer message and send the G-RNTI to a receiving apparatus so that the receiving apparatus can receive the multicast session corresponding to the G-RNTI in the DRX manner after receiving the MAC layer message and the MAC subheader corresponding to the MAC layer message.

The present application further provides a sending apparatus for a DRX Command. DRX Commands during a sending process may further include the DRX Command for multicast and the long DRX Command for multicast, and DRX cycles include the DRX long cycle for multicast and the DRX short cycle for multicast.

The present application further provides a sending apparatus for a DRX Command. The sending apparatus further includes a configuration module. The configuration module is configured to configure at least one of the following corresponding parameters for the G-RNTI before sending the DRX Command:
the on duration timer for multicast configured to time the duration for receiving at the beginning of the DRX cycle;
the inactivity timer for multicast configured to time the duration for receiving after the PDCCH is monitored by the receiving end;
the DRX long cycle for multicast configured to time the total duration of the DRX long cycle for multicast started by the receiving end;
the DRX long cycle start subframe for multicast configured to denote that the receiving end uses the DRX long cycle for multicast from the DRX long cycle start subframe for multicast; or
the DRX long cycle start slot for multicast configured to denote that the receiving end uses the DRX long cycle for multicast from the DRX long cycle start slot for multicast in the DRX long cycle start subframe for multicast.

The preceding parameters are referred to as the DRX pattern for multicast.

The present application further provides a sending apparatus for a DRX Command. The sending apparatus further includes a configuration module. The configuration module is configured to further configure the following corresponding parameters for the G-RNTI before sending the DRX Command:
the DRX short cycle for multicast configured to time the total length of the DRX short cycle for multicast started by the receiving end; and
the DRX short cycle counter for multicast configured to counter the total number of times of DRX short cycles for multicast continuously started by the receiving end.

A sending apparatus for a DRX Command is provided. the DRX Command has a size of 0 bits.

The DRX Command is the MAC layer message (MAC CE), and the corresponding MAC subheader includes the LCID.

The LCID is configured to indicate the MAC CE as the DRX Command.

Optionally, the LCID is configured to indicate the MAC CE as the DRX Command for the unicast session or the long DRX Command for the unicast session.

Alternatively, the LCID is configured to indicate the MAC CE as the common DRX Command or the common long DRX Command.

Alternatively, the LCID is configured to indicate the MAC CE as a DRX Command for a multicast session or a long DRX Command for a multicast session.

Alternatively, the LCID is configured to indicate the MAC CE as the DRX Command for multicast corresponding to the group-radio network temporary identifier (G-RNTI) and/or temporary mobile group identifier and/or session identifier; or the LCID is configured to indicate the MAC CE as the long DRX Command for multicast corresponding to the group-radio network temporary identifier (G-RNTI) and/or temporary mobile group identifier and/or session identifier.

The present application provides a sending apparatus for a DRX Command. The group-radio network temporary identifier and/or the temporary mobile group identifier and/or the session identifier are indicated by the sent DRX Command and/or the MAC subheader.

Optionally, the group-radio network temporary identifier and/or the temporary mobile group identifier and/or the session identifier are indicated by the DRX Command. The indication manner includes, but is not limited to, that the group-radio network temporary identifier and/or the temporary mobile group identifier and/or the session identifier are included in the DRX Command; or information of the group-radio network temporary identifier and/or the temporary mobile group identifier and/or the session identifier is associated in the DRX Command.

Optionally, the group-radio network temporary identifier and/or the temporary mobile group identifier and/or the session identifier are indicated by the subheader of the DRX Command. The indication manner includes, but is not limited to, that the group-radio network temporary identifier and/or the temporary mobile group identifier and/or the session identifier are included in the subheader corresponding to the DRX Command; or information of the group-radio network temporary identifier and/or the temporary mobile group identifier and/or the session identifier is associated in the subheader corresponding to the DRX Command.

Optionally, the group-radio network temporary identifier and/or the temporary mobile group identifier and/or the session identifier are indicated by the DRX Command and the MAC subheader. The indication manner includes, but is not limited to, that the group-radio network temporary identifier and/or the temporary mobile group identifier and/or the session identifier are included in the DRX Command and the MAC subheader; or information of the group-radio network temporary identifier and/or the temporary mobile group identifier and/or the session identifier is associated in the DRX Command and the MAC subheader.

The present application provides a receiving apparatus for a DRX Command. The apparatus includes a receiving module and a monitoring module.

The receiving module is configured to receive the DRX Command.

The monitoring module is connected to the receiving module and is configured to monitor the PDCCH scheduling the DRX Command, where the PDCCH is addresed to the G-RNTI.

The G-RNTI corresponds to the multicast session and is configured to indicate the group of user equipments receiving the multicast session.

The apparatus further includes an execution module.

The execution module is connected to the receiving module and is configured to use the DRX cycle corresponding to the G-RNTI for the multicast session corresponding to the G-RNTI after receiving the DRX Command.

Specifically, the receiving apparatus receives the DRX Command through the receiving module, uses the DRX cycle corresponding to the G-RNTI through the execution module and receives the multicast session in the DRX manner.

The present application further provides a receiving apparatus for a DRX Command. The apparatus includes a receiving module.

The receiving module is configured to receive the DRX Command.

The apparatus further includes an obtaining module and an execution module.

The obtaining module is configured to obtain the G-RNTI and/or temporary mobile group identifier and/or session identifier that are indicated by the DRX Command and/or MAC subheader.

The execution module is configured to use the corresponding DRX cycle for the multicast session corresponding to the G-RNTI and/or the temporary mobile group identifier and/or the session identifier after receiving the DRX Command.

The present application further provides a receiving apparatus for a DRX Command. The receiving module includes a first receiving unit, a second receiving unit, a third receiving unit, a fourth receiving unit and a fifth receiving unit.

The first receiving unit is configured to receive the DRX Command when the DRX Command is the RRC layer message.

The second receiving unit is configured to receive the DRX Command when the DRX Command is the PHY message.

The third receiving unit is configured to receive the DRX Command when the DRX Command is the RLC layer message.

The fourth receiving unit is configured to receive the DRX Command when the DRX Command is the PDCP layer message.

The fifth receiving unit is configured to receive the DRX Command when the DRX Command is the MAC layer message.

Specifically, no matter whether the DRX Command is the RRC layer information, the PHY information, the RLC layer information, the PDCP layer information, or the MAC layer information, the first receiving unit, the second receiving unit, the third receiving unit, the fourth receiving unit, or the fifth receiving unit in the receiving module receives a message delivered by the receiving apparatus so that the receiving apparatus can use the DRX cycle.

The present application further provides a receiving apparatus for a DRX Command. The receiving apparatus further includes a configuration module. The configuration module is configured to receive at least one of the following parameters corresponding to the G-RNTI in a random order before receiving the DRX Command:
the on duration timer for multicast configured to time the duration for receiving at the beginning of the DRX cycle;
the inactivity timer for multicast configured to time the duration for receiving after the receiving end monitors the PDCCH;
the DRX long cycle for multicast configured to time the total duration of the DRX long cycle for multicast started by the receiving end;
the DRX long cycle start subframe for multicast configured to denote that the receiving end uses the DRX long cycle for multicast from the DRX long cycle start subframe for multicast; or
the DRX long cycle start slot for multicast configured to denote that the receiving end uses the DRX long cycle for multicast from the DRX long cycle start slot for multicast in the DRX long cycle start subframe for multicast.

The present application further provides a receiving apparatus for a DRX Command. The receiving apparatus further includes a configuration module. The configuration module is configured to receive at least one of the following parameters corresponding to the G-RNTI in a random order before receiving the DRX Command:
the on duration timer for multicast configured to time the duration for receiving at the beginning of the DRX cycle;
the inactivity timer for multicast configured to time the duration for receiving after the receiving end monitors the PDCCH;
the DRX long cycle for multicast configured to time the total duration of the DRX long cycle for multicast started by the receiving end;
the DRX long cycle start subframe for multicast configured to denote that the receiving end uses the DRX long cycle for multicast from the DRX long cycle start subframe for multicast;
the DRX long cycle start slot for multicast configured to denote that the receiving end uses the DRX long cycle for multicast from the DRX long cycle start slot for multicast in the DRX long cycle start subframe for multicast;
the DRX short cycle for multicast configured to time the total length of the DRX short cycle for multicast started by the receiving end; or
the DRX short cycle counter for multicast configured to time the total number of times of DRX short cycles for multicast continuously started by the receiving end.

The present application further provides a receiving apparatus for a DRX Command. The execution module includes a first execution unit and/or a second execution unit and/or a third execution unit.

The first execution unit is configured to, for the multicast session corresponding to the G-RNTI, use the DRX long cycle of the DRX for the G-RNTI.

The second execution unit is configured to stop the on duration timer of the DRX for the G-RNTI.

The third execution unit is configured to stop the inactivity timer of the DRX for the G-RNTI.

Optionally, during the process of performing operations by the second execution unit, the second execution unit may be configured to directly stop the on duration timer of the DRX for the G-RNTI. Alternatively, the second execution unit may be configured to predetermine whether the on duration timer in the DRX pattern for multicast corresponding to the G-RNTI is operating, and if so, the second execution unit is configured to stop the on duration timer of the DRX for the G-RNTI. The two operations are essentially the same except that the latter has a higher stability in the execution of an algorithm during the operation process.

Similarly and optionally, during the process of performing operations by the third execution unit, the third execution unit may be configured to directly stop the inactivity timer of the DRX for the G-RNTI. Alternatively, the third execution unit may be configured to predetermine whether the inactivity timer in the DRX pattern for multicast corresponding to the G-RNTI is operating, and if so, the third execution unit is configured to stop the inactivity timer of the DRX for the G-RNTI. The two operations are essentially the same except that the latter has a higher stability in the execution of an algorithm during the operation process.

Optionally, the preceding execution module may further include an execution unit that stops the DRX short cycle counter. The execution unit is configured to determine whether the DRX short cycle counter in the DRX pattern for multicast corresponding to the G-RNTI is operating and if so, stop the DRX short cycle counter for multicast. Whether the execution module includes the execution unit that stops the DRX short cycle counter for multicast does not affect other execution units for performing operations. The operation of the DRX short cycle counter for multicast is considered herein. To enable the receiving end to normally use the DRX long cycle for multicast corresponding to the G-RNTI without interference, the execution unit of the DRX short cycle counter for multicast is added.

The present application further provides a receiving apparatus for a DRX Command. The receiving module is configured to receive the DRX Command. The DRX short cycle for multicast is configured in the configuration module. The execution module includes a fourth execution unit and/or a fifth execution unit.

The fourth execution unit is configured to use the DRX short cycle for multicast corresponding to the G-RNTI for the multicast session corresponding to the G-RNTI.

The fifth execution unit is configured to start the DRX short cycle counter for multicast corresponding to the G-RNTI for the multicast session corresponding to the G-RNTI.

The present application further provides a receiving apparatus for a DRX Command. The second execution unit is configured to start the DRX short cycle counter for multicast in the DRX pattern for multicast corresponding to the G-RNTI in the first symbol after receiving the DRX Command.

The present application further provides a receiving apparatus for a DRX Command. The receiving module is configured to receive the DRX Command. The DRX short cycle for multicast is configured in the configuration module. The execution module includes a sixth execution unit.

The sixth execution unit is configured to use the DRX long cycle for multicast corresponding to the G-RNTI for the multicast session corresponding to the G-RNTI.

The present application further provides a receiving apparatus for a DRX Command. The DRX Command has a size of 0 bits.

The present application further provides a receiving apparatus for a DRX Command. The DRX Command is the MAC layer message (MAC CE), the corresponding MAC subheader includes the LCID, and the LCID indicates the type of the MAC layer message as the DRX Command.

The present application further provides a receiving apparatus for a DRX Command. The DRX Command is the MAC layer message (MAC CE), and the corresponding MAC subheader includes the LCID.

The LCID indicates the type of the MAC CE as the DRX Command for the unicast session or the long DRX Command for the unicast session.

Alternatively, the LCID indicates the type of the MAC CE as the common DRX Command or the common long DRX Command.

Alternatively, the LCID indicates the type of the MAC CE as the DRX Command for all the multicast sessions or the long DRX Command for all the multicast sessions.

Alternatively, the LCID indicates the type of the MAC CE as the DRX Command for the at least one multicast session corresponding to the group-radio network temporary identifier and/or the temporary mobile group identifier and/or the session identifier or the long DRX Command for the at least one multicast session corresponding to the group-radio network temporary identifier and/or the temporary mobile group identifier and/or the session identifier.

The present application further provides a receiving apparatus for a DRX Command. When the DRX Command is the MAC layer message, the indication module is configured to indicate the G-RNTI in the DRX Command and/or the MAC subheader corresponding to the DRX Command.

The present application further provides a receiving apparatus for a DRX Command. The DRX Commands include the DRX Command for multicast and the long DRX Command for multicast, and the DRX cycles include the DRX long cycle for multicast and the DRX short cycle for multicast.

The present application further provides a receiving apparatus for data DRX. The group-radio network temporary identifier and/or temporary mobile group identifier and/or the session identifier are indicated by the received DRX Command and/or the MAC subheader.

Optionally, the group-radio network temporary identifier and/or the temporary mobile group identifier and/or the session identifier are indicated by the DRX Command. The indication manner includes, but is not limited to, that the group-radio network temporary identifier and/or the temporary mobile group identifier and/or the session identifier are included in the DRX Command; or the information of the group-radio network temporary identifier and/or the temporary mobile group identifier and/or the session identifier is associated in the DRX Command.

Optionally, the group-radio network temporary identifier and/or the temporary mobile group identifier and/or the session identifier are indicated by the subheader of the DRX Command. The indication manner includes, but is not limited to, that the group-radio network temporary identifier and/or the temporary mobile group identifier and/or the session identifier are included in the subheader corresponding to the DRX Command; or the information of the group-radio network temporary identifier and/or the temporary mobile group identifier and/or the session identifier is associated in the subheader corresponding to the DRX Command.

Optionally, the group-radio network temporary identifier and/or the temporary mobile group identifier and/or the session identifier are indicated by the DRX Command and the corresponding subheader. The indication manner includes, but is not limited to, that the group-radio network temporary identifier and/or the temporary mobile group identifier and/or the session identifier are included in the DRX Command and the MAC subheader; or the information of the group-radio network temporary identifier and/or the temporary mobile group identifier and/or the session identifier is associated in the DRX Command and the MAC subheader.

The receiving apparatuses provided in the present application may perform the steps in the preceding embodiment one to embodiment four.

In conclusion, after receiving the DRX Command, the receiving apparatus uses the DRX cycle using the at least one parameter (that is, the DRX pattern) configured for the G-RNTI through the receiving module, the configuration module, the obtaining module and the execution module for the multicast session corresponding to the G-RNTI.

The present application further provides a communication system. The communication system includes the preceding sending apparatuses and the receiving apparatuses.

The present application further provides a computer-readable storage medium for storing program instructions which, when executed by a computer, cause the computer to perform the preceding sending methods for a DRX Command.

The present application further provides a computer-readable storage medium for storing program instructions which, when executed by a computer, cause the computer to perform the preceding data DRX methods.

The preceding embodiments may be implemented in whole or in part by software, hardware, firmware, or any combination thereof. Implementation by software may be implementation in whole or in part in the form of a computer program product. The computer program product includes one or more computer instructions. When the computer loads and executes the computer program instructions, the flows or functions described in accordance with embodiments of the present application are generated in whole or in part. The computer may be a general-purpose computer, a special-purpose computer, a computer network, or another programmable apparatus. The one or more computer instructions may be stored in a computer-readable storage medium or transmitted from one computer-readable storage medium to another computer-readable storage medium. For example, the one or more computer instructions may be transmitted from one web site, computer, server, or data center to another web site, computer, server, or data center in a wired way (such as through a coaxial cable, an optical fiber, or a digital subscriber line ) or in a wireless way (such as through infrared, wireless, or microwave). The computer-readable storage medium may be any available medium that can be accessed by a computer, or an integrated data storage device such as a server or a data center that includes one or more available media. The available medium may be a magnetic medium (such as a floppy disk, a hard disk, or a magnetic tape), an optical medium (such as a digital video disc (DVD)), or a semiconductor medium (such as a solid state disk (SSD)).

Those of ordinary skill in the art may be aware that the units and algorithmic steps of the examples described in conjunction with the embodiments disclosed herein can be implemented with electronic hardware, or a combination of computer software and electronic hardware. Whether these functions are performed in hardware or software depends on the specific application and design constraints of the technical solution. Those skilled in the art may use different methods to perform the described functions for each specific application, but such implementation should not be considered to be beyond the scope of the present application.

The preceding are only preferred embodiments of the present application and thereby are not construed as limiting the embodiments and scope of the present application. Those skilled in the art should be aware that all solutions resulting from equivalent substitutions and obvious changes that are made by the description and illustrations of the present application shall be included in the scope of the present application.

## Claims

1. A receiving method for a discontinuous reception, DRX, command, comprising:
receiving, by a receiving end, the DRX command, wherein the DRX command is scheduled by a physical downlink control channel, PDCCH, addressed to a radio network temporary identifier, RNTI, and the RNTI comprises a group-radio network temporary identifier, G-RNTI, the G-RNTI corresponds to a multicast session and is configured to indicate a group of user equipments receiving the multicast session; and
after receiving the DRX command, using, by the receiving end, a DRX cycle corresponding to the G-RNTI for the multicast session corresponding to the G-RNTI.

2. The method of claim 1, before receiving the DRX command, further comprising: receiving, by the receiving end in a random order, at least one of the following parameters corresponding to the G-RNTI:
an on duration timer for multicast configured to time a duration for receiving at a beginning of the DRX cycle;
an inactivity timer for multicast configured to time a duration for receiving after the PDCCH is monitored by the receiving end;
a DRX long cycle for multicast configured to denote a total duration of the DRX long cycle for multicast used by the receiving end;
a DRX long cycle start subframe for multicast configured to denote that the receiving end uses a DRX long cycle for multicast from the DRX long cycle start subframe for multicast; or
a DRX long cycle start slot for multicast configured to denote that the receiving end uses a DRX long cycle for multicast from the DRX long cycle start slot for multicast in a DRX long cycle start subframe for multicast.

3. The method of claim 1 or 2, after receiving the DRX command, performs, by the receiving end in a random order, the following:
using the DRX long cycle for multicast of the DRX for the G-RNTI;
stopping the on duration timer of the DRX for the G-RNTI; and
stopping the inactivity timer of the DRX for the G-RNTI.

4. The method of to claim 1, wherein,
the DRX command has a fixed size of 0 bits; and
the DRX command is a medium access control, MAC, layer message and is indicated by a MAC subheader with a logical channel identifier, LCID, wherein the LCID is configured to indicate a type of the MAC layer message as the DRX command.

5. The method of claim 1 or 4, wherein the DRX command is a MAC layer message and is indicated by a MAC subheader with an LCID, and the LCID is configured to indicate one of the following:
indicate a type of the MAC layer message as a DRX command for a unicast session or a long DRX command for a unicast session; or
indicating a type of the MAC layer message as a common DRX command or a common long DRX command; or
indicating a type of the MAC layer message as DRX commands for all multicast sessions or long DRX commands for all multicast sessions; or
indicating a type of the MAC layer message as a DRX command for a multicast session corresponding to at least one of the G-RNTI, a temporary mobile group identifier, TMGI, or a session identifier; or
indicating a type of the MAC layer message as a long DRX command for a multicast session corresponding to at least one of the G-RNTI, a TMGI, or a session identifier.

6. The method of any one of claims 1 to 5, further comprising:
receiving, by the receiving end, the DRX command; wherein the RNTI comprises a cell-radio network temporary identifier, C-RNTI, and DRX command is scheduled by the PDCCH addressed to the G-RNTI or the C-RNTI;
obtaining at least one of the G-RNTI, a TMGI, or a session identifier indicated by at least one of the DRX command or a MAC subheader; and
after receiving the DRX command, using, by the receiving end, the DRX cycle for the multicast session corresponding to the at least one of the G-RNTI, the TMGI, or the session identifier.

7. The method of any one of claims 1 to 5, after receiving the DRX command, further comprising:
in response to the receiving end having configured a DRX short cycle for multicast corresponding to the G-RNTI, for the multicast session corresponding to the G-RNTI, performing at least one of: using the DRX short cycle for multicast corresponding to the G-RNTI, or starting the DRX short cycle counter for multicast corresponding to the G-RNTI; or
in response to the receiving end not configuring a DRX short cycle for multicast corresponding to the G-RNTI, using the DRX long cycle for multicast corresponding to the G-RNTI for the multicast session corresponding to the G-RNTI.

8. A sending method for a discontinuous reception, DRX, command, comprising:
scheduling, by a sending end, the DRX command through a physical downlink control channel, PDCCH, and scrambling the PDCCH by a radio network temporary identifier, RNTI;
sending, by the sending end, the DRX command to a receiving end, wherein the RNTI comprises a group-radio network temporary identifier, G-RNTI, and the G-RNTI corresponds to a multicast session and is configured to indicate a group of user equipments receiving the multicast session.

9. The method of claim 8, before sending the DRX command, further comprising: configuring, by the sending end, at least one of the following parameters corresponding to the G-RNTI for the G-RNTI:
an on duration timer for multicast configured to time a duration for receiving at a beginning of the DRX cycle;
an inactivity timer for multicast configured to time a duration for receiving after the PDCCH is monitored by the receiving end;
a DRX long cycle for multicast configured to denote a total duration of the multicast DRX long cycle used by the receiving end;
a DRX long cycle start subframe for multicast configured to denote that the receiving end uses a DRX long cycle for multicast from the DRX long cycle start subframe for multicast; or
a DRX long cycle start slot for multicast configured to denote that the receiving end uses a DRX long cycle for multicast from the DRX long cycle start slot for multicast in a DRX long cycle start subframe for multicast.

10. The method of to claim 8, wherein,
the DRX command has a fixed size of 0 bits; and
the DRX command is a medium access control, MAC, layer message and is indicated by a MAC subheader with a logical channel identifier, LCID, wherein the LCID is configured to indicate a type of the MAC layer message as the DRX command.

11. The method of to claim 8 or 10, wherein the DRX command is a MAC layer message and is indicated by a MAC subheader with an LCID, and the LCID is configured to indicate one of the following:
indicating a type of the MAC layer message as a DRX command for a unicast session or a long DRX command for a unicast session; or
indicating a type of the MAC layer message as a common DRX command or a common long DRX command; or
indicating a type of the MAC layer message as a DRX command for all multicast sessions or a long DRX command for all multicast sessions; or
indicating a type of the MAC layer message as a DRX command for a multicast session corresponding to at least one of the G-RNTI, a temporary mobile group identifier, TMGI, or a session identifier; or
indicating a type of the MAC layer message as a long DRX command for a multicast session corresponding to at least one of the G-RNTI, a temporary mobile group identifier, TMGI, or a session identifier.

12. The method of any one of claims 8 to 11, wherein,
the RNTI comprise a cell-radio network temporary identifier, C-RNTI, and
scrambling the PDCCH scheduling the DRX command by the G-RNTI or the C-RNTI;
indicating at least one of the G-RNTI, a TMGI, or a session identifier in at least one of the DRX
command or a MAC subheader; and
sending, by the sending end, the DRX command.

13. A receiving apparatus for a discontinuous reception, DRX, command, comprising:
a receiving module configured to receive the DRX command; and
a monitoring module connected to the receiving module and configured to monitor a physical downlink control channel, PDCCH, scheduling the DRX command, wherein the PDCCH is addressed by a radio network temporary identifier, RNTI; wherein the RNTI comprises a group-radio network temporary identifier, G-RNTI, and the G-RNTI corresponds to a multicast session and is configured to indicate a group of user equipments receiving the multicast session; and
an execution module connected to the receiving module and configured to, after the DRX command is received, use a DRX cycle corresponding to the G-RNTI for the multicast session corresponding to the G-RNTI.

14. The apparatus of claim 13, further comprising a configuration module, wherein the configuration module is configured to, before the DRX command is received, receive at least one of the following parameters corresponding to the G-RNTI in a random order:
a on duration timer for multicast configured to time a duration for receiving at a beginning of the DRX cycle;
an inactivity timer for multicast configured to time a duration for receiving after the PDCCH is monitored by the receiving end;
a DRX long cycle for multicast configured to denote a total duration of the the DRX long cycle for multicast used by the receiving end;
a DRX long cycle start subframe for multicast configured to denote that the receiving end uses a DRX long cycle for multicast from the DRX long cycle start subframe for multicast; or
a DRX long cycle start slot for multicast configured to denote that the receiving end uses a DRX long cycle for multicast from the DRX long cycle start slot for multicast in a DRX long cycle start subframe for multicast.

15. The apparatus of claim 13 or 14, wherein the execution module comprises at least one of the following:
a first execution unit configured to use the DRX long cycle of the DRX for the G-RNTI;
a second execution unit configured to stop the on duration timer of the DRX for the G-RNTI; or
a third execution unit configured to stop the inactivity time of the DRX for the G-RNTI.

16. The apparatus of claim 13, wherein the DRX command has a fixed size of 0 bits;
the DRX command is a medium access control, MAC, layer message and is indicated by a MAC subheader with a logical channel identifier, LCID, wherein the LCID is configured to indicate a type of the MAC layer message as the DRX command.

17. The apparatus of claim 13 or 16, wherein the DRX command is a MAC layer message and is indicated by a MAC subheader with an LCID, and the LCID is configured to perform one of the following:
indicating a type of the MAC layer message as a DRX command for a unicast session or a long DRX command for a unicast session; or
indicating a type of the MAC layer message as a common DRX command or a common long DRX command; or
indicating a type of the MAC layer message as a DRX command for all multicast sessions or a long DRX command for all multicast sessions; or
indicating a type of the MAC layer message as a DRX command for a multicast session corresponding to at least one of the G-RNTI, a temporary mobile group identifier, TMGI, or a session identifier; or
indicating a type of the MAC layer message as a long DRX command for a multicast session corresponding to at least one of the G-RNTI, a TMGI, or a session identifier.

18. The apparatus of any one of claims 13 to 17, wherein the receiving module is configured to receive the DRX command, wherein the RNTI comprises a cell-radio network temporary identifier, C-RNTI; and the monitoring module is configured to monitor the PDCCH scheduling the DRX command, wherein the PDCCH is addressed to the G-RNTI or the C-RNTI;
the apparatus further comprises:
an obtaining module configured to obtain at least one of the G-RNTI, a TMGI, or a session identifier indicated by at least one of the DRX command or a MAC subheader; and
the execution module is configured to, after the DRX command is received, use the DRX cycle for the multicast session corresponding to at least one of the G-RNTI, a TMGI, or the session identifier.

19. The apparatus of any one of claims 13 to 17, wherein the execution module comprises a fourth execution unit configured to:
in response to a DRX short cycle corresponding to the G-RNTI being configured in the receiving apparatus, for the multicast session corresponding to the G-RNTI, perform at least one of: using the DRX short cycle corresponding to the G-RNTI, or starting the DRX short cycle counter corresponding to the G-RNTI; and/or
in response to a DRX short cycle corresponding to the G-RNTI being not configured in the receiving apparatus, use the DRX cycle corresponding to the G-RNTI for the multicast session corresponding to the G-RNTI.

20. A sending apparatus for a discontinuous reception, DRX, command, comprising:
a sending module configured to send the DRX command; and
the apparatus further comprising:
a scrambling module connected to the sending module and configured to scramble a physical downlink control channel, PDCCH, scheduling the DRX command by a radio network temporary identifiers, RNTI,
wherein the RNTI comprises a group-radio network temporary identifier, G-RNTI, and the G-RNTI corresponds to a multicast session and is configured to indicate a group of user equipments receiving the multicast session.

21. The apparatus of claim 20, further comprising a configuration module, wherein the configuration module is configured to, before the DRX command is sent, configure at least one of the following parameters corresponding to the G-RNTI for the G-RNTI:
an on duration timer for multicast configured to time a duration for receiving at a beginning of the DRX cycle;
an inactivity timer for multicast configured to time a duration for receiving after the PDCCH is monitored by the receiving end;
a DRX long cycle for multicast configured to denote a total duration of the multicast DRX long cycle used by the receiving end;
a DRX long cycle start subframe for multicast configured to denote that the receiving end uses a DRX long cycle for multicast from the DRX long cycle start subframe for multicast; or
a DRX long cycle start slot for multicast configured to denote that the receiving end uses a DRX long cycle for multicast from the DRX long cycle start slot for multicast in a DRX long cycle start subframe for multicast.

22. The apparatus of claim 20, wherein,
the DRX command has a fixed size of 0 bits;
the DRX command is a medium access control, MAC, layer message and is indicated by a MAC subheader with a logical channel identifier, LCID, wherein the LCID is configured to indicate a type of the MAC layer message as the DRX command.

23. The apparatus of claim 20 or 22, wherein the DRX command is the MAC layer message and is indicated by a MAC subheader with an LCID, and the LCID is configured to perform one of the following:
indicating a type of the MAC layer message as a DRX command for a unicast session or a long DRX command for a unicast session; or
indicating a type of the MAC layer message as a common DRX command or a common long DRX command; or
indicating a type of the MAC layer message as a DRX command for all multicast sessions or a long DRX command for all multicast sessions; or
indicating a type of the MAC layer message as a DRX command for a multicast session corresponding to at least one of the G-RNTI, a temporary mobile group identifier, TMGI, or a session identifier; or
indicating a type of the MAC layer message as a long DRX command for a multicast session corresponding to at least one of the G-RNTI, a temporary mobile group identifier, TMGI, or a session identifier.

24. The apparatus of any one of claims 20 to 23, wherein the RNTI comprises a cell-radio network temporary identifier, C-RNTI;
the scrambling module is configured to scramble the PDCCH scheduling the DRX command by the G-RNTI or the C-RNTI;
the apparatus further comprises:
an indication module connected to the sending module and configured to indicate at least one of the G-RNT, a TMGI, or a session identifier in at least one of the DRX command or a MAC subheader; and
the sending module is configured to send the DRX command.
